# EUROPÄISCHE PATENTSCHRIFT

(11) **EP 3 543 152 B1**
(45) Veröffentlichungstag und Bekanntmachung des Hinweises auf die Patenterteilung: **07.04.2021**
(21) Anmeldenummer: 18208612.4
(22) Anmeldetag: 27.11.2018
(51) Int. Cl.: B65B 5/06, B65B 5/08, B25J 9/02, B25J 9/10, B25J 19/00, B65B 35/36, B65B 35/44, B65B 35/38, B65B 59/04, B65B 41/06, B65B 43/26

(54) **BALKONARTIGE VERPACKUNGSMASCHINE MIT EINEM LINEAR GEFÜHRTEN ROBOTIKARM**
BALCONY-LIKE PACKAGING MACHINE WITH A LINEAR GUIDED ROBOTIC ARM
MACHINE D'EMBALLAGE DE TYPE BALCON DOTÉE D'UN BRAS ROBOTIQUE GUIDÉ LINÉAIRE

(30) Priorität: 23.03.2018 DE 102018107002
(43) Veröffentlichungstag der Anmeldung: 25.09.2019
(73) Patentinhaber: THEEGARTEN-PACTEC GMBH & CO. KG, 01237 Dresden (DE)
(72) Erfinder: Körner, Jürgen, 01796 Pirna (DE); Frömmel, Thomas, 01900 Kleinröhrsdorf (DE); Irrgang, Sebastian, 01279 Dresden (DE)
(74) Vertreter: Grünecker Patent- und Rechtsanwälte PartG mbB

(56) Entgegenhaltungen:
- EP-A1- 0 111 565
- EP-A2- 1 645 513
- DE-A1- 2 704 693
- DE-A1-102009 022 820
- DE-A1-102014 108 982
- DE-T5-112007 003 490
- FR-A1- 2 938 463
- US-A- 4 516 476

## Beschreibung

Die Erfindung betrifft eine Verpackungsmaschine in Balkonbauweise mit einem Produktbereich zum Zuführen und Verpacken von Produkten, einem an einer Rückseite des Produktbereichs angeordneten Maschinenaufbau, der sich senkrecht zum Produktbereich erstreckt, und mindestens eine Robotikeinheit zum Positionieren und/oder Verpacken der Produkte im Produktbereich. Darüber hinaus betrifft die Erfindung eine derartige Robotikeinheit.

Der generelle Aufbau und konzeptionelle Einsatz von balkonartigen Verpackungsmaschinen ist in der Technik gut bekannt. Die Balkonbauweise derartiger Verpackungsmaschinen ermöglicht eine gute Zugänglichkeit des Produktbereichs durch das Bedienpersonal zur Sicherung einer kontinuierlichen Zuführung und Verpackung der Produkte, zur Behebung von Störungen und zur Reinigung des Produktbereichs. Neben der Zugänglichkeit des Produktbereichs von der Vorderseite ist hierbei auch der Bereich oberhalb des Produktbereichs im Wesentlichen frei von Aufbauten, insbesondere frei von rahmengeführten Antriebs- und Funktionseinheiten für die Positionierung und Verpackung der Produkte, zu halten. Entsprechend der rückseitigen und vertikalen Anordnung der Maschinenaufbauten solcher balkonartigen Verpackungsmaschinen sind die in den Produktbereich hineinragenden Werkzeuge zum Positionieren und/oder Verpacken der Produkte üblicherweise einseitig am Maschinenaufbau abgestützt.

Zwischen der seitlichen Zuführung unsortierter Produkte zum Produktbereich einer solchen balkonartigen Verpackungsmaschine und eines üblicherweise seitlichen Abführens der in Schachteln oder Kartons verpackten Produkte an einer gegenüber liegenden Stirnseite des Produktbereichs, werden die Produkte im Produktbereich der Verpackungsmaschine zunächst entsprechend positioniert und anschließend in den Schachteln oder Kartons verpackt. Beim Positionieren erfolgt je nach Einsatz der Verpackungsmaschine und der Beschaffenheit der Produkte ein Ausrichten, Sortieren, Bewegen, Heben, Schieben, Greifen und Umsetzen, um schließlich das Verpacken des Produkts zu ermöglichen, das neben dem Einführen und Platzieren der Produkte in eine seitlich oder zentral zugeführte Schachtel oder Karton, auch das Falten der Schachtel, das Umlegen von Deckeln oder Laschen, das Verschließen und Markieren der Verpackungen einschließen kann. Entsprechend umfasst eine derartige Verpackungsmaschine eine Vielzahl von unterschiedlichen Arbeitsstationen, die von einem zu verpackenden Produkt nacheinander durchlaufen werden, wobei die Anzahl und Art der Arbeitsstationen von dem zu verpackenden Produkt und der gewählten Verpackung abhängen. Als Produkt ist im Folgenden nicht nur das zu verpackende Produkt als solches zu verstehen, sondern kann sich auch auf ein bereits in einer Verpackung befindliches Produkt beziehen. Typische Produkte die mit einer derartigen balkonartigen Verpackungsmaschine verpackt werden sind vorverpackte oder unverpackte Produkte aus dem Lebensmittelbereich beispielsweise Schokoladenriegel, Brühwürfel, Kaugummistreifen, Tabs, bzw. andere Riegel, Tüten, Beutel oder Becher mit festen, pastösen oder flüssigen Lebensmitteln.

Durch den balkonartigen Maschinenaufbau erfordern derartige Verpackungsmaschinen eine aufwändige mechanische Montage und exakte Ausrichtung der verschiedenen Maschineneinheiten um eine notwendige Genauigkeit der Positionierung der Produkte vor und während der Verpackung zu erreichen. Aus der DE 10 2006 045 292 A1 ist beispielsweise eine balkonartige Verpackungsmaschine für Blister bekannt, die durch ihren modularen Aufbau aus einzelnen Maschineneinheiten eine hohe Genauigkeit des mechanischen Transports der Blisterpackungen bei einer gleichzeitig geringen Einrichtzeit ermöglicht. Die EP 1 645 513 A2 beschreibt eine weitere Verpackungsmaschine mit mehreren balkonartigen Modulen zum Durchführen einzelner Schnitte eines Verpackungsprozesses von Zigaretten.

Sowohl bei der Positionierung der unsortiert zugeführten Produkte als auch bei der Anordnung der Produkte vor dem eigentlichen Verpackungsvorgang und beim Umsetzen in die Verpackung stellt sich bei balkonartigen Verpackungsmaschinen das Problem die Produkte im Produktbereich zu bewegen und umzusetzen, insbesondere aus dem Bereich der Zuführung des Produkts in den Bereich der Verpackungsvorbereitung, oder beim Umsetzen in die Verpackung. Da bei einer Verpackungsmaschine in Balkonbauweise der Einsatz rahmengeführter Greifeinrichtungen dem vorderseitig offenen und überhangfreien Konzept solcher Verpackungsmaschinen widerspricht, werden hier für das Bewegen und Umsetzen von Produkten mehrarmige Roboter mit entsprechenden Greifeinrichtungen verwendet. Die DE 10 2009 022 820 A1 beschreibt die Übergabevorrichtung einer balkonartigen Verpackungsmaschine, bei der zwei an der Rückseite der Verpackungsmaschine angeordnete zweiarmige Roboter eine Gruppe von Produkten aus einer zugeordneten Zuführeinheit aufnehmen und in eine zwischen der Zuführeinheit und den rückseitigen Robotern geführte Verpackungseinheiten umsetzen. Eine weitere einseitig offene und überbaufreie Verpackungsmaschine zeigt die US 2017/203865 A1, wobei auch hier wieder ein zweiachsiger Roboter die Produkte aus einem Zuführbereich erfasst und in innen geführte Verpackungseinheiten umsetzt. Das von dem zweiarmigen Roboter bewegte Greifwerkzeug erfasst gleichzeitig mehrere voneinander beabstandete Produkte und positioniert diese Produkte in einem anderen Abstand in den jeweiligen Verpackungen, wozu die einzelnen Greifer dieses Greifwerkzeugs sich in einer dritten Richtung gegenüber dem zweiarmigen Roboter bewegen. Neben der generellen Problematik solcher mehrarmiger Roboter im Bereich der Arbeitsgeschwindigkeit für eine sichere und genaue Produktübergabe, sind die Gelenke und Antriebe mehrarmiger Roboter auch bei balkonartigen Verpackungsmaschinen oberhalb des Produktbereichs angeordnet und müssen hinsichtlich den Anforderungen an die Sicherheit für das Bedienpersonal und die jeweiligen Hygieneanforderungen besonders geschützt werden.

Der vorliegenden Erfindung liegt daher die Aufgabe zugrunde, eine Verpackungsmaschine in balkonbauweise bereit zu stellen, die eine sichere und schnelle Produktübergabe bei einem überbaufreien, zumindest einseitig zugänglichen Produktbereich ermöglicht. Darüber hinaus soll eine Robotikeinheit für eine solche sichere und schnelle Produktübergabe bereitgestellt werden.

Diese Aufgabe wird bei einer gattungsgemäßen balkonartigen Verpackungsmaschine erfindungsgemäß dadurch gelöst, dass die mindestens eine Robotikeinheit ein Gehäuse, mindestens einen in mindestens zwei Linearrichtungen gegenüber dem Gehäuse bewegbaren Robotikarm, mindestens zwei unabhängige Antriebe, die in dem Gehäuse angeordnet und mit dem Robotikarm verbunden sind, um den Robotikarm entsprechend in den mindestens zwei Linearrichtungen zu bewegen, und ein an einem freien Ende des Robotikarms angeordnetes Werkzeug zum Positionieren und/oder Verpacken der Produkte aufweist, wobei der Robotikarm in der ersten Linearrichtung bewegbar ist, um die Auskragungslänge des Robotikarms zu verändern, und in mindestens einer zweiten Linearrichtung quer zur ersten Linearrichtung bewegbar ist, und wobei die Robotikeinheiteine Manschette aufweist, die den Robotikarm umgibt und das Gehäuse gegenüber dem Produktbereich abdichtet. Diese Robotikeinheit ermöglicht trotz eines balkonartigen Maschinenaufbaus an der Rückseite des Produktbereichs, durch den die Vorderseite des Produktbereichs zugänglich und insgesamt überbaufrei ist, um den Verpackungsablauf zu kontrollieren und Störungen zu beseitigen sowie hohe Hygieneanforderungen für den Druckbereich erfüllen zu können, ein unabhängiges Bewegen und Umsetzen der Produkte, ohne einen Einsatz mehrarmiger, gelenkgekoppelter Roboterarme. Entsprechend können die notwendigen Antriebe zur Zuführung, Positionierung und Verpackung der Produkte in dem Gehäuse, bzw. in dem Maschinenaufbau angeordnet sein, wodurch die hohen Hygieneanforderungen im Pharmazie- und Lebensmittelbereich einfacher zu erfüllen sind. Wie beispielsweise in der DE 100 26 497 A1 gezeigt werden in herkömmlichen balkonartigen Verpackungsmaschinen mechanische Antriebe eingesetzt, bei denen über Kurven- oder Koppelgetriebe überlagerte Bewegungen der Werkzeuge erzeugt werden. Eine Flexibilität oder aktive Beeinflussung dieser mechanischen Bewegung ist nicht möglich. Der Bewegungsablauf kann nur durch einen Austausch von Kurvenscheiben oder anderer Komponenten erzielt werden. Im Gegensatz zu solchen mechanischen Antrieben sind Robotikeinheiten Antriebe mit mindestens zwei Freiheitsgraden die es ermöglichen ein Werkzeug flexibel an jedem Punkt innerhalb eines Arbeitsbereichs zu positionieren. Hierbei sind für eine Bewegung in einer von zwei Richtungen definierten Ebene, z.B. einer von der ersten und zweiten Linearrichtung aufgespannten Vertikalebene zum Produktbereich und dem Maschinenaufbau, zwei unabhängige Bewegungsachsen notwendig. Für eine Bewegung eines Robotikwerkzeugs in einem Arbeitsraum sind drei unabhängige Bewegungsachsen notwendig.

Das Positionieren der Produkte im Produktbereich umfasst neben dem einfachen Schieben und Bewegen der Produkte in der Ebene des Produktbereichs auch das Greifen, Heben und Umsetzen der Produkte. Das Verpacken der Produkte umfasst neben dem einfachen Einführen oder Umsetzen der Produkte in die als Schachteln oder gefaltete Kartone ausgeformten Verpackungen, auch das Umlegen von Deckeln und Laschen, das Verschließen der Verpackung sowie das Markieren der Verpackung. Im Gegensatz zu den herkömmlichen, mehrachsig bewegten Robotern für Verpackungsmaschinen in Balkonbauweise, z.B. Delta- oder Knickarmrobotern, kann der Robotikarm dieser Robotikeinheit sich in zwei Linearrichtungen bewegen, sodass das am freien Ende des Robotikarms angeordnete Werkzeug in einer vertikalen Ebene quer zum Produktbereich bewegbar ist. Je nach Anwendung kann die Robotikeinheit auch zwei oder mehrere miteinander gekoppelte Robotikarme aufweisen, die gegenüber dem Gehäuse in Richtung des Produktbereichs auskragen, parallel zueinander angeordnet und sich gemeinsam miteinander in der ersten und zweiten Linearrichtung bewegen. Dabei erstreckt sich die erste Linearrichtung, die die Auskragungslänge des Robotikarms verändert, aus dem Gehäuse der Robotikeinheit heraus in Richtung auf den Produktbereich hin, d.h. im Wesentlichen senkrecht zum rückseitigen Maschinenaufbau. Die zweite Linearrichtung des Robotikarms, die quer zur ersten Linearrichtung steht, verläuft im Wesentlichen parallel zum Maschinenaufbau, bzw. zu einem dem Produktbereich zugewandten Teil des Gehäuses der Robotikeinheit, sodass der eine mittels zweier unabhängiger Antriebe bewegbare Robotikarm ein Heben und Umsetzen von Produkten im Produktbereich ermöglicht. Dabei werden als unabhängige Antriebe, d.h. zwei freie nicht miteinander gekoppelter Antriebe, bevorzugt Elektroantriebe eingesetzt.

Insbesondere weist die Robotikeinheit mindestens zwei Linearführungen auf, die jeweils mit einem der unabhängigen Antriebe gekoppelt sind, um den Robotikarm in einer der mindestens zwei Linearrichtungen zu bewegen. Die Bewegung des Robotikarms entlang zweier Linearführungen ermöglicht eine funktionssichere Bewegung des Robotikarms in den beiden Linearrichtungen und damit eine freie Positionierung des Werkzeugs innerhalb der von den beiden Linearrichtungen aufgespannten senkrechter oder vertikaler Ebene, ohne eine Schwenkbewegung des Robotikarms zu erfordern. Alternativ könnte auch ein Koppelgetriebe mit zwei Freiheitsgraden mit den mindestens zwei unabhängigen Antrieben gekoppelt werden, um den einteiligen Robotikarm in den mindestens zwei Linearrichtungen zu bewegen.

Eine zweckmäßige Ausführungsform sieht vor, dass der Robotikarm bis zum freien Ende des Robotikarms gelenkfrei ausgebildet ist. Entsprechend erfolgt die Veränderung der Auskragungslänge des Robotikarms in der ersten Linearrichtung ausschließlich über die mindestens zwei Linearführungen. Somit ergibt sich die unterschiedliche Länge des Robotikarms zwischen dem am freien Ende angeordneten Werkzeug und dem senkrechten Maschinenaufbau an der Rückseite des Produktbereichs rein aus der Bewegung des Robotikarms in der ersten Linearrichtung ohne ein Gelenk oder einen mechanischen oder elektrischen Antrieb mit entsprechenden Versorgungen und Abdeckungen im Bereich des auskragenden, sich über den Produktbereich erstreckenden Robotikarms zu benötigen.

Das an dem sich außerhalb des senkrechten Maschinenaufbaus befindlichen freien Ende des Robotikarms angeordnete Werkzeug kann sich weiter relativ zum Robotikarm bewegen und ist entsprechend nicht Teil des linearen Robotikarms. Dabei ermöglicht die relative Bewegung des Werkzeugs ein Greifen, Heben, Drehen, Schwenken und Zusammenführen der Produkte im Produktbereich in einer deutlich verbesserten Funktionsgeschwindigkeit und einer verbesserten Hygienesituation sowie einer gleichzeitig besseren Flexibilität hinsichtlich der einsetzbaren Werkzeuge und deren Funktionen.

Eine bevorzugte Ausbildung sieht vor, dass der Robotikarm rohrförmig ausgebildet ist und in dem rohrförmigen Robotikarm eine entkoppelte Abtriebsachse angeordnet ist, um das am freien Ende des Robotikarms angeordnete Werkzeug zum Positionieren und/oder Verpacken der Produkte relativ zum Robotikarm zu bewegen. Eine derartige entkoppelte und translatorisch zum Robotikarm bewegbare Abtriebsachse ermöglicht die Anordnung eines Antriebs zur relativen Bewegung des Werkzeugs jenseits des rohrförmigen Robotikarms. Entsprechend wird durch die distale Positionierung eines Antriebs das Einhalten von Hygieneanforderungen erleichtert und ansonsten benötigte Abschirmungen der Antriebe eingespart.

Weiterhin kann das am freien Ende des Robotikarms angeordnete Werkzeug ein Getriebe aufweisen, um eine Bewegung der Abtriebsachse in eine Bewegung des Werkzeugs zu übersetzen, um so die Produkte zu positionieren und/oder zu verpacken. Ein solches Getriebe ermöglicht eine einfache und saubere Umsetzung der Bewegung der Abtriebsachse in eine Bewegung des Werkzeugs relativ zum rohrförmigen Robotikarm. Dabei kann die Bewegung der Abtriebsachse sowohl translatorisch in der ersten Linearrichtung, als auch über eine Drehbewegung relativ zum rohrförmigen Robotikarm erfolgen. Bevorzugt kann das Getriebe die Bewegung der Abtriebsachse in eine Bewegung des Werkzeugs in einer dritten Richtung quer zur ersten und zweiten Linearrichtung übersetzen. Dies realisiert in einer sehr einfachen Weise eine flexible Bewegung der Robotikeinheit, bzw. des Werkzeugs am freien Ende des einteiligen Robotikarms, in einem Arbeitraum mit drei Freiheitsgraden.

Weiter ermöglicht ein rohrförmiger Robotikarm sowie die lineare Bewegung des Robotikarms mit dem am freien Endes des Robotikarms angeordneten Werkzeugs in den mindestens zwei Linearrichtungen das Vorsehen einer zusätzlichen Medienführung durch den rohrförmigen Robotikarm, beispielsweise einer Fluidleitung zur Versorgung des Werkzeugs mit Gas, Flüssigkeit oder Vakuum, über geeignete Schläuche oder feste Rohrleitungen, einer Energieleitung zur Übertragung elektrischer Energie oder einer Signalleitung für optische Impulse über entsprechende Leiter, um das Werkzeug mit weiteren Funktionen auszustatten. Beispielsweise können Werkzeuge mit mehreren Sauggreifern ausgebildet sein, die sich relativ zum Robotikarm bewegen und über eine Saugfunktion Produkte im Produktbereich erfassen, heben, bewegen und umsetzen. Alternativ kann, beispielsweise bei mechanischen Greifern, auch eine zweite entkoppelte Abtriebsachse vorgesehen sein, die sich ebenfalls durch das Innere des rohrförmigen Robotikarms erstreckt und eine zweite Funktion des Werkzeugs, beispielsweise das Greifen von Produkten, antreibt. Dabei ist auch ein Aufteilen der Abtriebsachse und der mindestens einen Medienführung auf mehrere Rohreinheiten des Robotikarms oder auf mehrere miteinander gekoppelte Robotikarme denkbar.

Für eine sichere Abdichtung des Robotikbereichs und einen Schutz der Linearführungen des Robotikarms kann die Robotikeinheit eine Manschette aufweisen, die den Robotikarm umgibt, und ein Gehäuse der Robotikeinheit unabhängig von der Bewegung des Robotikarms in der ersten und der mindestens zweiten Linearrichtung gegenüber dem Produktbereich abdichtet. Eine solche Manschette, die in einer unflexiblen ebenen Ausführung in einer geeigneten Aufnahme am Gehäuse geführt ist, oder die in einer elastischen Ausgestaltung am Rand der Manschette am Gehäuse befestigt ist, ermöglicht eine Abdeckung und ein Schutz der im Gehäuse der Robotikeinheit befindlichen Antriebe oder Linearführungen und verhindert damit gleichzeitig auch eine Belastung der Hygienesituation im Produktbereich. Bei einer unflexiblen ebenen Ausführung der Manschette, beispielsweise als Kulisse, erstreckt sich der Robotikarm in der ersten Linearrichtung verschiebbar durch eine im Umfang angepasste Öffnung, die je nach Anforderung an die Abdichtung des Gehäuses mit einer Gleitdichtung versehen ist durch die sich der Robotikarm gleitend in der ersten Linearrichtung bewegen kann. Bei einer flexiblen Ausgestaltung der Manschette, beispielsweise in Form eines elastischen Balgs, kann durch eine entsprechend abgedichtete Befestigung des Balgs am Gehäuse und dem auskragenden Robotikarm eine besonders wirkungsvolle Abdichtung des Gehäuses der Robotikeinheit, bzw. ein hoher Immissionsschutz des Produktbereichs erzielt werden.

Eine besondere Ausgestaltung sieht vor, dass die Robotikeinheit der balkonartigen Verpackungsmaschine einen ersten Elektromotor für die Bewegung des Robotikarms in der ersten Linearrichtung, einen zweiten Elektromotor für die Bewegung des Robotikarms in der mindestens einen weiteren Linearrichtung und einen dritten Elektromotor für eine Bewegung des Werkzeugs relativ zum Robotikarm aufweist, wobei der erste, zweite und dritte Elektromotor getrennt voneinander ausgebildet und innerhalb eines Gehäuses der Robotikeinheit angeordnet sind. Im Gegensatz zu herkömmlichen Robotereinheiten für balkonartige Verpackungsmaschinen sind sämtliche Elektromotoren für die Bewegung des auskragenden Robotikarms in den mindestens zwei Linearrichtungen und die Aktuierung des Werkzeug, das an dem sich über den Produktbereich befindlichen freien Ende des Robotikarms angeordnet ist, im Gehäuse der Robotikeinheit, d. h. im Bereich des senkrechten Maschinenaufbaus angeordnet und somit von Einflüssen aus dem Produktbereich geschützt, sowie gegenüber einer Beeinflussung des Produktbereichs gesichert. Dabei kann die Antriebsbewegung sowohl der zwei Linearführungen des Robotikarms, als auch des Werkzeugs durch einfache Servomotoren oder Linearmotoren erfolgen. Die Anordnung der jeweiligen Elektromotoren im Gehäuse der Robotikeinheit ermöglicht es vollständig auf sich am Roboterarm mitbewegende Antriebe zu verzichten.

Des Weiteren betrifft die vorliegende Erfindung eine Robotikeinheit für eine Verpackungsmaschine, insbesondere für eine der oben beschriebenen Verpackungsmaschine in Balkonbauweise, mit mindestens einem Robotikarm und einem an einem freien Ende des Robotikarms angeordneten relativ zum Robotikarm bewegbaren Werkzeug, wobei die Robotikeinheit ein Gehäuse, mindestens drei unabhängige Antriebe, die in dem Gehäuse angeordnet sind, einen entlang mindestens zweier Linearrichtungen gegenüber dem Gehäuse bewegbaren, rohrförmigen Robotikarm und eine entkoppelte Abtriebsachse, die sich durch den rohrförmigen Robotikarm erstreckt, aufweist, wobei der rohrförmige Robotikarm von einem ersten Antrieb in einer ersten Linearrichtung bewegbar ist, um die Auskragungslänge des Robotikarms zu verändern, und von einem zweiten Antrieb in mindestens einer zweiten Linearrichtung quer zur ersten Linearrichtung bewegbar ist, und wobei die entkoppelte Abtriebsachse von einem dritten Antrieb relativ zum rohrförmigen Robotikarm bewegbar ist, um das Werkzeug unabhängig gegenüber dem Robotikarm zu bewegen. Diese besondere rohrförmige, linear geführte und gelenkfreie Ausgestaltung des Robotikarms einer solchen Robotikeinheit ermöglicht einen Einsatz in allen Bereichen mit hohen Hygieneanforderungen, insbesondere in balkonartigen Verpackungsmaschinen. Darüber hinaus ermöglicht diese Robotikeinheit eine sehr genaue Positionierung des Werkzeugs in der von der ersten und zweiten Linearrichtung aufgespannten Ebene, üblicherweise einer Vertikalebene zur Robotikeinheit, bzw. einem zugeordneten Produktbereich. Gleichzeitig ermöglichen die Antriebe, bevorzugt als Linearführungen ausgebildete Antriebe, auch eine hohe Geschwindigkeit bei der Positionierung des Werkzeugs, sodass sich mit einer solchen erfindungsgemäßen Robotikeinheit hohe Arbeitsgeschwindigkeiten bei der Positionierung von Produkten erzielen lassen. Dazu trägt auch die in dem rohrförmigen Robotikarm vorgesehene Abtriebsachse bei, die eine entkoppelte und freie Bewegung des Werkzeugs relativ zum Robotikarm ermöglicht.

Um eine freie entkoppelte Bewegung des Werkzeugs relativ zum Robotikarm in einer der hohen Arbeitsgeschwindigkeit der Linearführungen angepassten Weise umzusetzen, kann das am freien Ende des Robotikarms angeordnete Werkzeug ein Getriebe aufweisen, um eine Bewegung der entkoppelten Abtriebsachse in eine von den Linearrichtungen des Robotikarms unabhängige Bewegung des Werkzeugs zu übersetzen. Trotz der hohen Arbeitsgeschwindigkeit, ermöglicht ein solches Getriebe eine sehr freie Werkzeugwahl, um mit der Robotikeinheit Produkte zu positionieren, d.h. zu bewegen, heben, schieben, greifen und umsetzen, sowie zum Verpacken der Produkte in entsprechende Verpackungseinheiten, d.h. Produkte in die Verpackung einführen sowie die Verpackung falten, umlegen, verschließen und markieren.

Eine Variante sieht vor, dass in dem rohrförmigen Robotikarm eine Medienführung, insbesondere eine Fluidleitung, eine Energieleitung oder eine Signalleitung, vorgesehen ist, um das am freien Ende des Robotikarms angeordnete Werkzeug mit einem Medium zu versorgen. Die zusätzliche Medienführung durch den rohrförmigen Robotikarm, beispielsweise in Form einer leakagefreien Fluidleitung zur Versorgung des Werkzeugs mit Gas, Flüssigkeit oder Vakuum oder in Form einer Energie- oder Signalleitung zur Überttragung elektrischer oder optischer Impulse, kann dem Werkzeug die Zuordnung weiterer Funktionen ermöglichen, um über das sich relativ zum Robotikarm bewegende Werkzeug Produkte sicher zu erfassen, zu heben, zu bewegen und umzusetzen. Bei einem Vorsehen mehrerer miteinander gekoppelter Robotikarme oder mehrerer Rohreinheiten des Robotikarms kann parallel zu der mindestens einen Medienführung eine Abtriebsachse oder eine weitere Medienführungen in der anderen Rohreinheit oder einem zweiten gekoppelten Robotikarm vorgesehen sein.

Eine sinnvolle Ausführungsform sieht vor, dass die Robotikeinheit eine Manschette aufweist, die den Robotikarm umgibt und das Gehäuse der Robotikeinheit unabhängig von der Bewegung des Robotikarms in der ersten und der mindestens einen zweiten Linearrichtung abdichtet. In einer solchen Manschette können nicht nur die im Gehäuse der Robotikeinheit befindlichen Antriebe gegen Einwirkungen von außen geschützt werden, sondern es kann gleichzeitig auch der von dem Robotikarm und dem Werkzeug bearbeitete Produktbereich gegenüber einer Emission aus der Robotikeinheit geschützt werden. Für einen möglichst großen Arbeitsbereich des Robotikarms in der ersten und zweiten Linearrichtung kann die Manschette als Kulisse ausgebildet sein, die durch ihre plattenförmige stabile Form in einer geeigneten Führung oder Aufnahme am Gehäuse in der zweiten Linearrichtung geführt sein kann. Dabei erstreckt sich der in der ersten Linearrichtung auskragende Robotikarm durch eine entsprechende Öffnung in der Manschette, die über ihre Passform eine Dichtwirkung gegenüber dem Robotikarm erzielt oder mit einer zusätzlichen Gleitdichtung versehen ist. Um eine möglichst hohe Dichtwirkung zu erzielen, kann die Manschette flexibel ausgebildet sein, beispielsweise in Form eines elastischen Balgs. Ein solcher flexibler Balg lässt sich sowohl fest am Gehäuse der Robotikeinheit, als auch fest am rohrförmigen Robotikarm anordnen, wodurch der Arbeitsweg des Robotikarms in der ersten und zweiten Linearrichtung begrenzt wird. Sowohl eine feste als auch eine flexible Ausgestaltung der Manschette als Kulisse oder Balg ermöglichen eine gewisse, verhältnismäßig kleine Bewegung des Robotikarms in einer dritten Linearrichtung quer zur ersten Linearrichtung und der zweiten Linearrichtung, um Abweichungen bei der Anordnung der Robotikeinheit und des Werkzeugs im Betrieb zu kompensieren.

Eine günstige Ausbildung sieht vor, dass die Robotikeinheit einen ersten Elektromotor für die Bewegung des Robotikarms in der ersten Linearrichtung, einen zweiten Elektromotor für die Bewegung des Robotikarms in der mindestens einer zweiten Linearrichtung und einen dritten Elektromotor für die Bewegung des Werkzeugs aufweist, wobei der erste, zweite und dritte Elektromotor getrennt voneinander ausgebildet und innerhalb eines Gehäuses der Robotikeinheit angeordnet sind. Gegenüber herkömmlichen Robotikeinheiten sind sämtliche Elektromotoren für das Werkzeug und den zugehörigen auskragenden rohrförmigen Robotikarm im Gehäuse der Robotikeinheit angeordnet und damit gegenüber äußeren Einflüssen geschützt. Dies ermöglicht auch den Einsatz der erfindungsgemäßen Robotikeinheit in Verpackungsmaschinen mit hohen Hygieneanforderungen, da die Antriebe mit allen Versorgungsleitungen und auch zugehörige Linearführungen des Robotikarms innerhalb des Gehäuses der Robotikeinheit angeordnet und dort über einfache Servomotoren oder Linearmotoren angetrieben werden. Durch die Anordnung der Elektromotoren innerhalb des Gehäuses der Robotikeinheit kann auf außenliegende Antriebe und entsprechende Versorgungseinrichtungen an dem aus dem Gehäuse auskragenden Robotikarm verzichtet werden.

Im Folgenden wird eine Ausführungsform einer erfindungsgemäßen balkonartigen Verpackungsmaschine und einer Robotikeinheit anhand von Zeichnungen näher erläutert, wodurch weitere Einzelheiten und Merkmale der Erfindungen ersichtlich werden. Es zeigen:
Fig. 1 eine perspektivische Ansicht auf eine erfindungsgemäße balkonartige Verpackungsmaschine,
Fig. 2a eine perspektivische Ansicht einer erfindungsgemäßen Robotikeinheit für die Verpackungsmaschine aus Fig. 1,
Fig. 2b eine perspektivische teilweise geöffnete Ansicht der Robotikeinheit aus Fig. 2a,
Fig. 3 eine Seitenansicht der Robotikeinheit aus Fig. 2b,
Fig. 4 eine Vorderansicht der Robotikeinheit aus Fig. 2b,
Fig. 5 eine Draufsicht auf die Robotikeinheit aus Fig. 2b,
Fig. 6 ein Schnitt durch die Robotikeinheit aus Fig. 2b entlang der Linie A - A aus Fig. 4,
Fig. 7a eine teilweise freigeschnittene perspektivische Ansicht der Robotikeinheit aus Fig. 2b,
Fig. 7b eine perspektivische Ansicht der zweiten Linearführung aus Fig. 7a,
Fig. 7c eine perspektivische Ansicht des Führungswagens für den Robotikarm der zweiten Linearführung aus Fig. 7b,
Fig. 7d eine perspektivische Ansicht der ersten Linearführung aus Fig. 7a,
Fig. 7e eine perspektivische Ansicht der ersten Linearführung aus Fig. 7d und des Werkzeugantriebs,
Fig. 7f eine Draufsicht auf den Robotikarm der Robotikeinheit aus Fig. 7a,
Fig. 8a eine perspektivische Rückseitenansicht der freigeschnittenen Robotikeinheit aus Fig. 7a,
Fig. 8b eine Detailansicht der freigeschnittenen Robotikeinheit aus Fig. 7b und
Fig. 8c eine geschnittene Detailansicht des Robotikarms aus Fig. 6
Fig. 9 eine perspektivische Ansicht der Robotikeinheit aus Fig. 2b mit einem Werkzeug zum Greifen von Produkten.

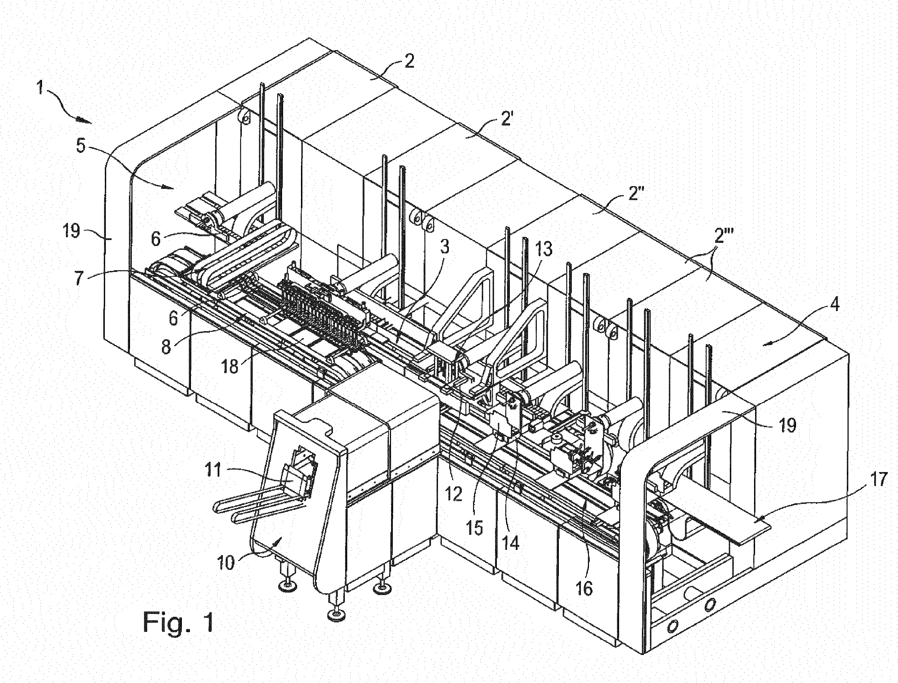

Eine erfindungsgemäße balkonartige Verpackungsmaschine 1 mit mehreren Robotikeinheiten 2 ist in der perspektivischen Darstellung in Fig.1 zu sehen. Entsprechend der Balkonbauweise dieser Verpackungsmaschine 1 ist der Produktbereich 3 von der Vorderseite der Verpackungsmaschine 1 zugänglich und der Produktbereich 3 selbst frei von überhängenden Aufbauten oder rahmengeführten Werkzeugen. Auf der Rückseite des Produktbereichs 3 ist der senkrecht zum Produktbereich 3 angeordnete Maschinenaufbau 4 mit mehreren in dem Maschinenaufbau 4 angeordneten Robotikeinheiten 2 zu erkennen.

An dem im oberen linken Bereich der Verpackungsmaschine 1 in Fig.1 zu erkennenden Zuführbereich 5 werden die Produkte 6, beispielsweise Riegel, Tabs, Tüten, Beuteln oder Bechern mit festen, pastösen oder flüssigen Lebensmitteln, durch den Seitenrahmen 19 unsortiert dem Produktbereich 3 zugeführt. Die in dem Zuführbereich 5 angeordnete Robotikeinheit 2 sortiert die in einem ungeordneten Zustand ankommenden Produkte 6, die anschließend mittels einer Übergabeeinheit 7 an den an der Vorderseite des Produktbereichs 3 angeordneten Übergabebereich 8 übergeben werden. Die Robotikeinheit 2 im Zuführbereich 5 führt in der dargestellten Verpackungsmaschine 1 lediglich eine Aufreihung der unsortiert ankommenden Produkte 6 und gegebenenfalls eine Vorsortierung fehlerhafter Produkte 6 aus, während die Übergabe der Produkte 6 in den Übergabebereich 8 mittels einer separaten Übergabeeinheit 7 erfolgt. Anstelle dieser Übergabeeinheit 7 könnte jedoch auch eine weitere Robotikeinheit 2 das Umsetzen der Produkte 6 aus dem Zuführbereich 5 in den Übergabebereich 8 durchführen.

Im Übergabebereich 8 erfolgt bereits durch die Übergabeeinheit 7 eine Gruppierung der Produkte 6, wodurch auf dem jeweiligen Transportelement 18 Felder von in mehreren Reihen und Zeilen angeordneten Produkten 6 entstehen. Am Ende des Übergangsbereichs 8 werden die Produkte 6 feldweise, oder alternativ in Reihen oder Zeilen durch eine weitere Robotikeinheit 21 mit einem speziellen Werkzeug 23 erfasst und auf einem Umsetzbereich positioniert, der im Bereich der Rückseite des Produktbereichs 3 vor dem balkonartigen Maschinenaufbau 4 verläuft. Beim Umsetzen der Produkte 6 aus dem Übergabebereich 8 in den Umsetzbereich werden hier jeweils mehrere Felder von Produkten 6 übereinandergestapelt, die dann im Umsetzbereich weiter transportiert werden.

Vor dem Umsetzbereich ist an der Vorderseite des Produktbereichs 3 eine Fördereinheit 10 angeordnet, die flache Faltschachtelzuschnitte 11 aus einem Magazin der Verpackungsmaschine 1 zuführt, in der die Faltschachtelzuschnitte 11 in einer Aufrichteinheit 12 gefaltet werden. Dazu drückt ein von einer Robotikeinheit 2" bewegter Stempel 13 die Faltschachtelzuschnitte 11 in eine Faltform (nicht gezeigt) der Aufrichteinheit 12, wodurch die flachen Faltschachtelzuschnitte 11 zu einer Faltschachtel 14 aufgerichtet werden, bei der der anhängende Deckel 15 aufrecht nach oben steht. Die Faltschachtel 14 wird aus der Aufrichteinheit 12 direkt von der Transporteinheit 16 für die Faltschachteln 14 übernommen und mit offenen Deckel 15 in Richtung des Abführbereichs 17 transportiert.

Eine weitere Robotikeinheit 2'" hebt oder schiebt die Stapel von Produkten 6 aus dem Umsetzbereich in die offenen Faltschachteln 14 auf der Transporteinheit 16, wobei hier je nach Aufwand und Anzahl der Arbeitsschritte für das Übertragen der Produkte 6 aus dem Umsetzbereich in die Faltschachtel 14 mehrere Robotikeinheiten 2'" eingesetzt werden können. Die mit den Produkten 6 gefüllten Faltschachteln 14 werden auf der Transporteinheit 16 weiter in Richtung des Abführbereichs 17 transportiert und am Ende der Transporteinheit 16 von einer weiteren Robotikeinheit 2 an den Abführbereich 17 übergeben. Die Verpackungsmachine 1 weißt sowohl im Abführbereich 17 als auch im Zuführbereich 5 einen Seitenrahmen 19 auf, der den Produktbereich 3 und den Maschinenaufbau 4 der Verpackungsmachine 1 in Balkonbauweise seitlich begrenzt und stabilisiert.

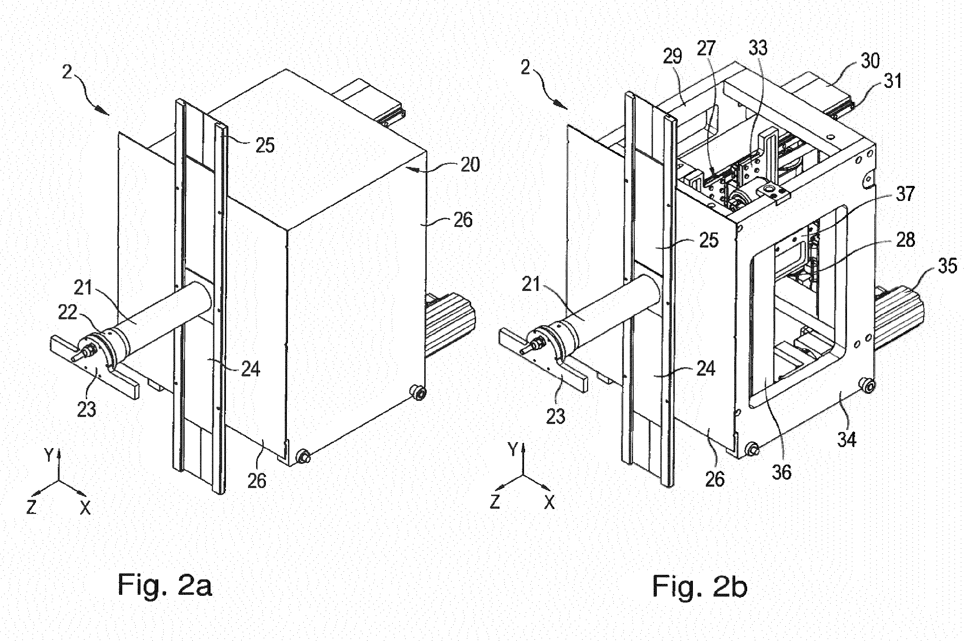

Im Folgenden wird eine Robotikeinheit 2, die in der in Fig. 1 dargestellten und oben im Prinzip erläuterten balkonartigen Verpackungsmaschine 1 mit verschiedenen Werkzeugen 23 für unterschiedlichste Funktionen zum Positionieren und Verpacken der Produkte 6 eingesetzt wird, näher erläutert. In Fig. 2a ist eine perspektivische Ansicht einer solchen erfindungsgemäßen Robotikeinheit 2 dargestellt. Die Robotikeinheit 2 weist einen aus dem Gehäuse 20 der Robotikeinheit 2 auskragenden Robotikarm 21 auf, der an dem aus dem Gehäuse 20 auskragenden freien Ende 22 des Robotikarms 21 einen relativ zum Robotikarm 21 bewegbar angeordnetes Werkzeug 23 aufweist. Das Gehäuse 20 weist an der Vorderseite der Robotikeinheit 2, die im balkonartigen Maschinenaufbau 4 dem Produktbereich 3 der Verpackungsmaschine 1 zugewandt ist, sowie an den Seiten und der Oberseite der Robotikeinheit 2 Gehäuseabdeckungen 26 auf, die die Robotikeinheit 2 gegenüber Einflüssen aus der Umgebung und dem Produktbereich 3 schützen. Um den auskragenden Robotikarm 21 ist in der Ebene der vorderen Gehäuseabdeckung 26 eine Manschette 24 vorgesehen, die hier als eine rechteckige plattenförmige unelastische Kulisse ausgebildet ist. Aus einer von der Manschette 24 ausgebildeten Gleitdichtung ragt der Robotikarm 21 in der ersten Linearrichtung (Z-Achse) vor. Die Manschette ist an der vorderen Gehäuseabdeckung 26 in einer Führung 25 aufgenommen ist, entlang der sich der Robotikarm 21 in einer zweiten Linearrichtung (Y-Achse) in der Ebene der Gehäuseabdeckung 26 bewegen kann.

Fig. 2b zeigt die Robotikeinheit 2 aus Fig. 2a bei der die seitlichen und oberen Gehäuseabdeckungen 26 des Gehäuses 20 entfernt sind, sodass verschiedene Bauteile der ersten Linearführung 27, die den Robotikarm 21 in der auskragenden ersten Linearrichtung bewegt und der zweiten Linearführung 28, die den Robotikarm 21 in der zweiten Linearrichtung bewegt, zu erkennen sind. An der gestellfesten Rahmenplatte 29 der ersten Linearführung 27, die in Fig. 2b an der hinten dargestellten Seite liegt, ist eine gestellfeste Führungsplatte 30 mit einer Schiene 31 angeordnet, auf der sich die Antriebsplatte 32 der ersten Linearführung 27 und die Antriebplatte 33 zur unabhängigen Bewegung des Werkzeugs 23 verschiebbar angeordnet sind. An der vorne dargestellten Seite der Robotikeinheit 2 sind die gestellfeste Führungsplatte 34 der zweiten Linearführung 28, sowie der daran befestigte Servomotor 35 und der Zahnriemen 36 zum Bewegen des auf dem Führungswagen 37 angeordneten Robotikarm 21 in der zweiten Linearrichtung dargestellt.

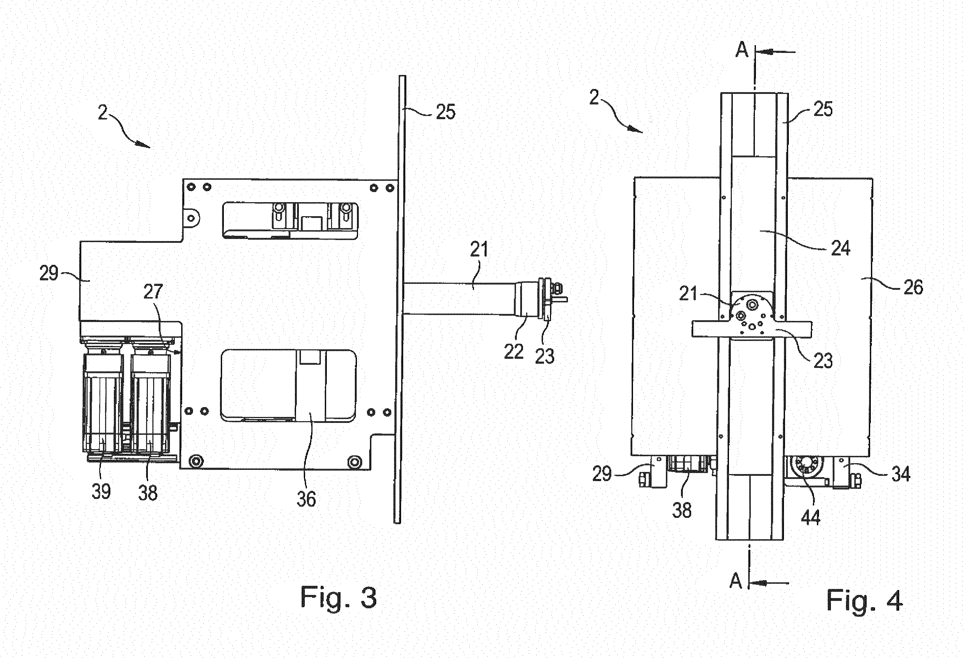

Fig. 3 zeigt eine Seitenansicht auf die Rahmenplatte 29 der ersten Linearführung 27. An der Rückseite der Robotikeinheit 2 sind nebeneinander aufrechtstehend der Servomotor 38 der ersten Linearführung 27 und der Servomotor 39 für die unabhängige Bewegung des Werkzeugs 23 angeordnet. Die Führung 25 der Manschette 24, durch die sich der Robotikarm 21 in der ersten Linearrichtung 27 aus dem Gehäuse 20 der Robotikeinheit 2 erstreckt, steht sowohl an der Oberseite, als auch der Unterseite der Robotikeinheit 2 gegenüber dem Gehäuse 20 vor, um eine vollständige Abdeckung des Gehäuses 20 bei einer Bewegung des Robotikarms 21 in der zweiten Linearrichtung sicherzustellen. Dies ist noch einmal deutlich auch in der Frontansicht der Robotikeinheit 2 in Fig. 4 zu erkennen. Die in der Führung 25 aufgenommene Manschette 24 des Robotikarms 21 kann sich in der zweiten Linearrichtung entlang der in Fig. 4 dargestellten Linie A-A bewegen ohne eine entsprechende Öffnung 54 in der vorderen Gehäuseabdeckung 26 freizulegen.

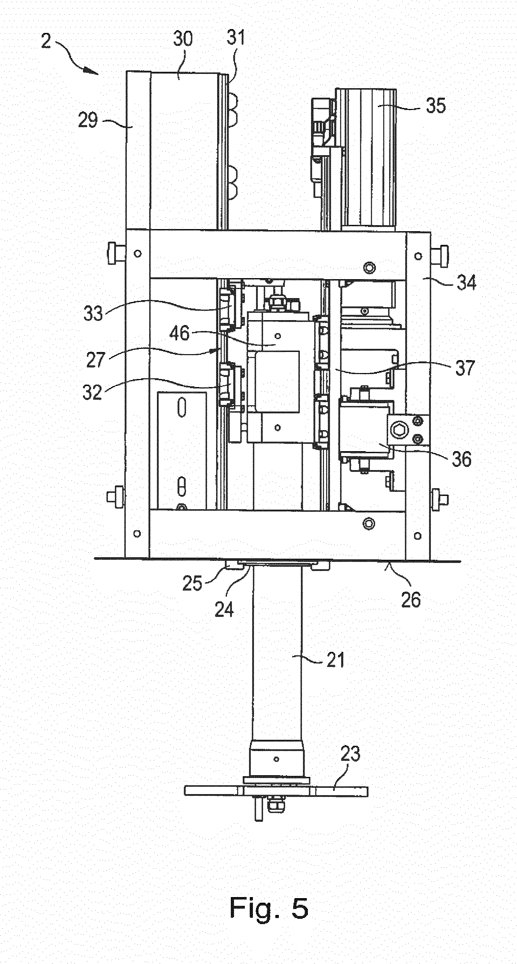

Fig. 5 zeigt eine Draufsicht auf eine erfindungsgemäße Robotikeinheit 2 von oben ohne obere Gehäuseabdeckung 26. Der zwischen der ersten Linearführung 27 und der zweiten Linearführung 28 angeordnete Führungswagen 37 mit dem daran befestigten Robotikarm 21 ermöglicht neben der Bewegung in der zweiten Linearrichtung über den Führungswagen 37 auch eine relative Bewegung der Antriebsplatte 32 der ersten Linearführung 27 und der Antriebsplatte 33 bzw. eine entsprechende Wirkung auf den Robotikarm 21 bzw. das Werkzeug 23.

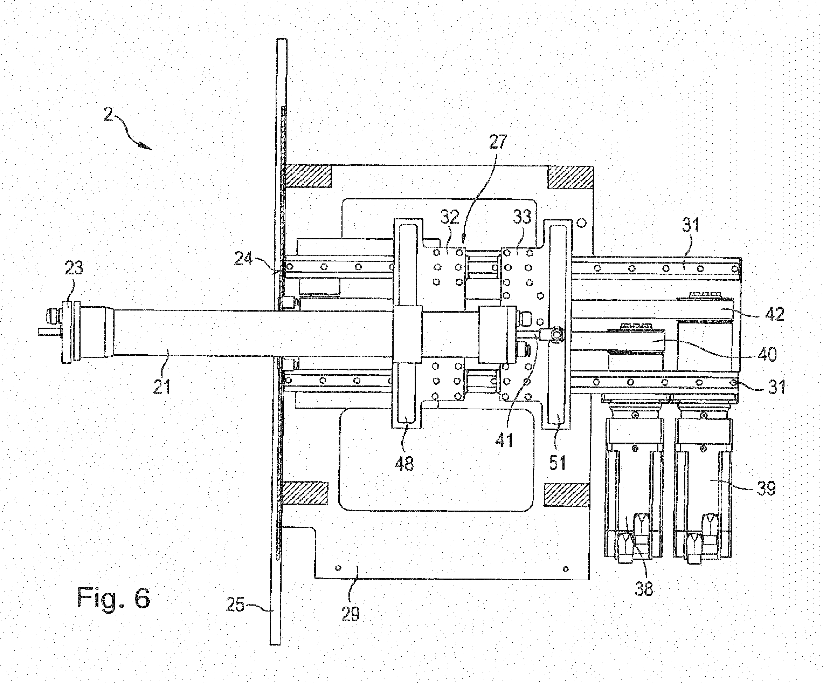

Die Schnittansicht durch die Robotikeinheit 2 entlang der in Fig. 4 dargestellten Linie A-A in Fig. 6 zeigt einen Blick auf die erste Linearführung und den Antrieb des Werkzeugs 23. Der Robotikarm 21 wird über die Antriebsplatte 32, die durch einen Zahnriemen 40 vom Servomotor 38 der ersten Linearführung 27 angetrieben wird, in der ersten Linearrichtung bewegt. Dabei wird die Antriebsplatte 32 auf zwei Schienen 31 geführt, die über zwei Führungsplatten 30 mit der gestellfesten Rahmenplatte 29 der ersten Linearführung 27 verbunden sind. Über den ebenfalls auf den Schienen 31 in der ersten Linearrichtung geführten Antriebsplatte 33 wird eine Abtriebsachse 41, die sich durch den rohrförmigen Robotikarm 21 hindurch erstreckt relativ zum Robotikarm 21 in der ersten Linearrichtung bewegt. Die Antriebsplatte 33 wird dabei über einen Zahnriemen 42 von dem Servomotor 39 angetrieben.

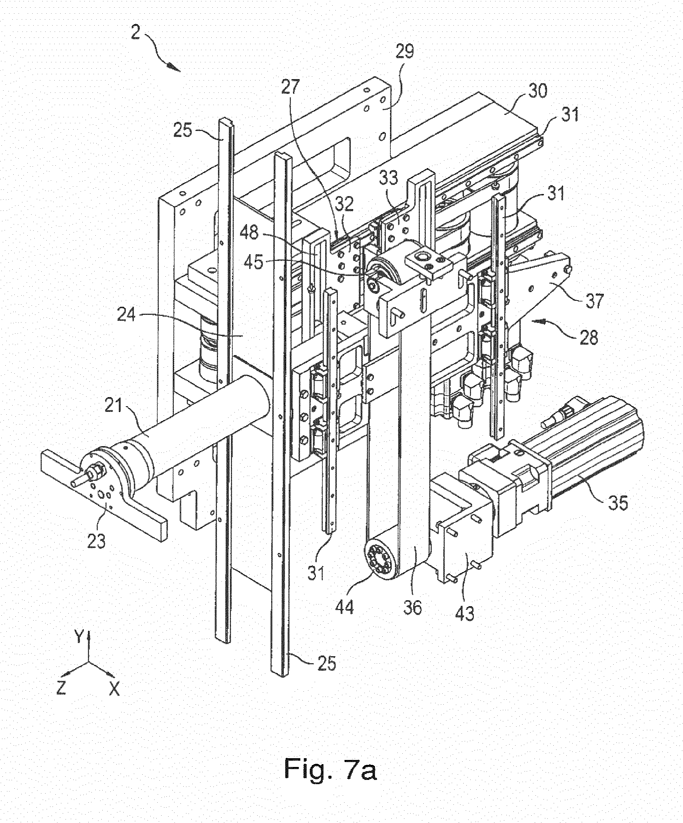

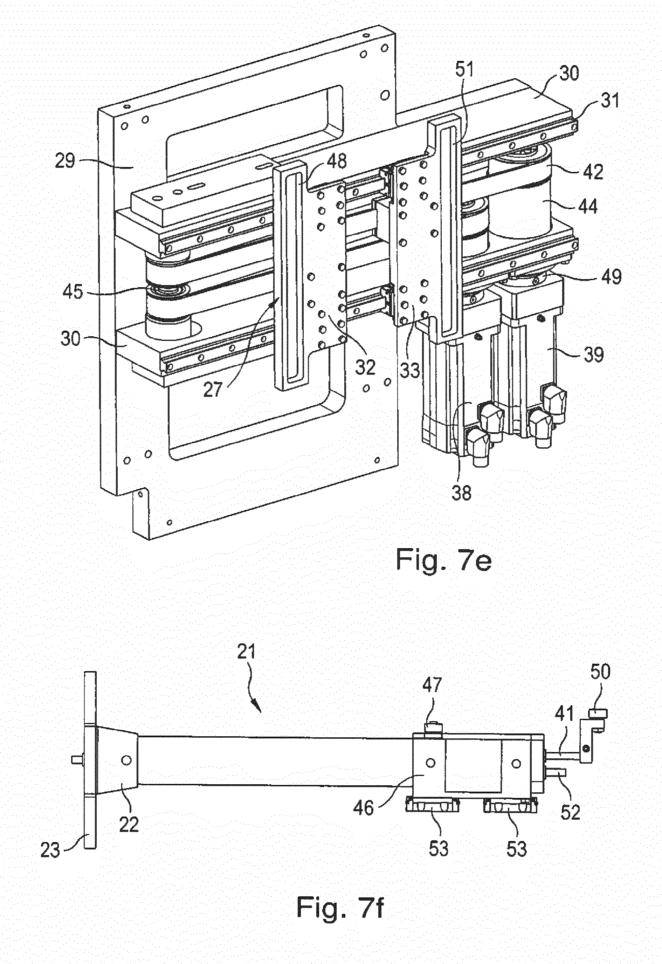

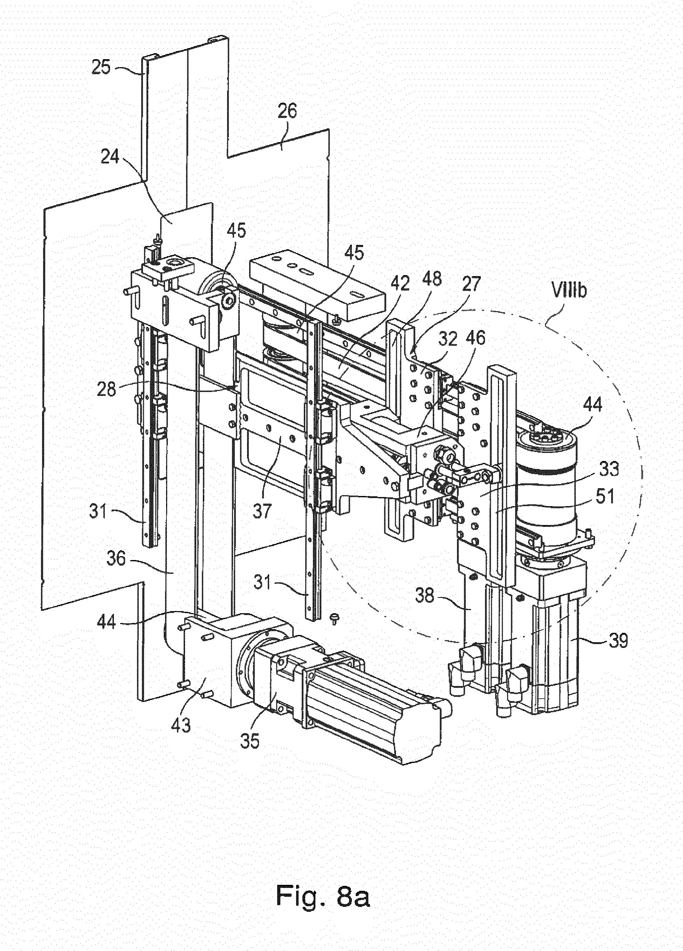

Anhand der Figuren 7a-7f und 8a-8c wird die Funktionsweise einer erfindungsgemäßen Robotikeinheit 2 einer Verpackungsmaschine 1 in Balkonbauweise näher erläutert. Die perspektivische Ansicht der Robotikeinheit 2 in Fig. 7a zeigt die bereits in Fig. 2b dargestellte Robotikeinheit 2 ohne die frontseitige Gehäuseabdeckung 2 und die gestellfeste Führungsplatte 34 der zweiten Linearführung 28. In der Fig. 7a ist der Aufbau und die Funktion der zweiten Linearführung 28 gut zu erkennen. Die zweite Linearführung 28 ist als klassischer Linearantrieb aufgebaut, dessen positionsfeste Bauteile mit der hier nicht dargestellten gestellfesten Führungsplatte 34 verbunden sind. Der Servomotor 35, der über eine Montageplatte 43 mit der Führungsplatte 34 verbunden ist, treibt über ein Ritzel 44 den Zahnriemen 36 an, der über eine mit der Führungsplatte 34 verbundene Umlenkrolle 45 geführt ist und fest mit dem Führungswagen 37 verbunden ist. Bei einer Bewegung des Zahnriemens 36 wird der Führungswagen 37 und mit ihm der Robotikarm 21 auf den ebenfalls mit der Führungsplatte 34 verbundene Schienen 31 in der zweiten Linearrichtung bewegt.

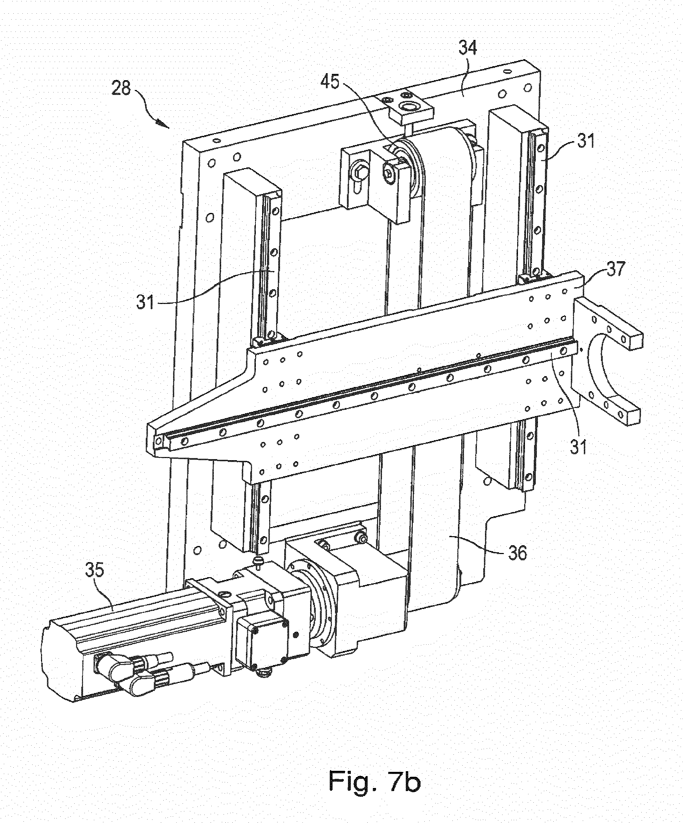

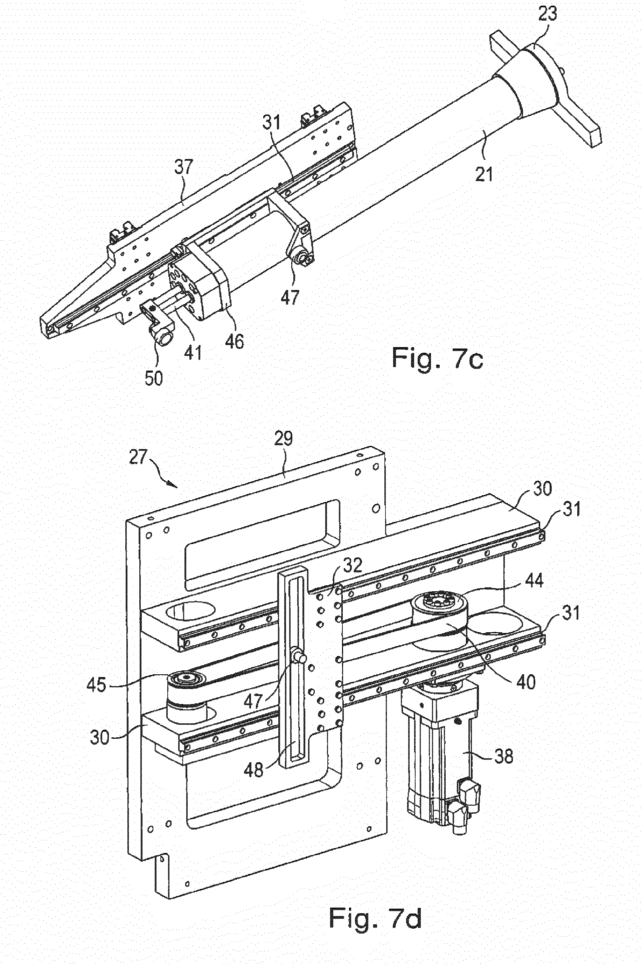

Die Funktionsweise der zweiten Linearführung 28 für eine Bewegung des Robotikarms 21 in der zweiten Linearrichtung (Y-Achse) wird anhand von Fig. 7b nochmal deutlicher, in der alle wesentlichen Bauteile der zweiten Linearführung 28 dargestellt sind. Die auf der gestellfesten Führungsplatte 34 befestigten Schienen 31 ermöglichen eine sichere verwindungsfreie Führung des Führungswagen 37 in Richtung der zweiten Linearrichtung. Auf dem Führungswagen 37 ist eine weitere Schiene 31 zur Anordnung des Robotikarms 21 vorgesehen, entlang derer der Robotikarm 21 in der ersten Linearrichtung bewegt wird. Der Führungswagen 37 ist mit dem Zahnriemen 36 verbunden und wird bei einer Bewegung des Zahnriemens 36 in der gleichen Richtung bewegt. Der Zahnriemen 36 wird über das Ritzel 44 von dem an der Führungsplatte 34 befestigten Servomotor 38 angetrieben, wobei der Zahnriemen 36 an der oberen Seite der Führungsplatte 34 an einer Umlenkrolle 45 umgelenkt wird. Wie in Fig. 7c gezeigt, ist auf dem Führungswagen 37 auch der Robotikarm 21 angeordnet, der sich mittels einer Rohrhalterung 46 auf der Schiene 31 in der ersten Linearrichtung relativ zum Führungswagen 37 bewegen kann. An der Rohrhalterung 46 ist auf der dem Führungswagen 37 abgewandten Seite eine Kurvenrolle 47 vorgesehen, über die die Antriebsplatte 32 der ersten Linearführung 27 auf die Rohrhalterung 46 wirkt, um den Robotikarm 21 in der ersten Linearrichtung zu bewegen.

Der Aufbau und die Funktion der ersten Linearführung 27 ist in Fig. 7d gezeigt. Die Antriebsplatte 32 ist auf den beiden Schienen 31, die über die Führungsplatten 30 fest mit der gestellfesten Rahmenplatte 29 verbunden sind, verkipptfrei geführt. Die Führungsplatte 32 wird über den Zahnriemen 40 bewegt, der an der Rückseite der Antriebsplatte 32 fest mit dieser verbunden ist. Der Zahnriemen 40 wird über den Servomotor 38, der fest mit der unteren Führungsplatte 30 verbunden ist, über ein Ritzel 44 angetrieben und an der Vorderseite der Führungsplatte 30 an einer Umlenkrolle 45 umgelenkt. Die Antriebsplatte 32 weist eine sich in der zweiten Linearrichtung erstreckende Nut 48 auf, in der die Kurvenrolle 47 der Rohrhalterung 46 geführt ist.

Fig. 7e zeigt die in Fig. 7d gezeigte erste Linearführung 27 und weiter die Bauteile des zusätzlichen Werkzeugantriebs 49 für eine relativ zum Robotikarm 21 freie Bewegung des Werkzeugs 23. Der zusätzlich zum Servomotor 38 der ersten Linearführung 27 in der Führungsplatte 30 angeordnete weitere Servomotor 39 des Werkzeugantriebs 49 treibt über den Zahnriemen 42 die Antriebsplatte 33 des Werkzeugantriebs 49 an. Die Antriebsplatte 33 des Werkzeugantriebs 49 ist ebenso wie die Antriebsplatte 32 auf den an den Führungsplatten 30 der ersten Linearführung 27 angeordneten Schienen 37 kippsicher geführt. Bei einer reinen Bewegung des Robotikarms 21 in Richtung der ersten Linearrichtung bewegen sich die Antriebsplatten 32 und 33 synchron zueinander. Bei einer unsynchronen Bewegung der Antriebsplatten 32 und 33 wird die über Nut 48 in der Antriebsplatte 32 des Werkzeugantriebs 49 bewegte Abtriebsachse 41 relativ zu dem rohrförmigen Robotikarm 21 bewegt. Wie in Fig. 7c zu sehen, ist die Abtriebsachse 41 mit einer zweiten Kurvenrolle 50 verbunden, die sich in der zweiten Linearrichtung erstreckenden Nut 51 in der Antriebsplatte 33 geführt ist und bei einer relativen Bewegung der Antriebsplatten 32 und 33 zueinander in der ersten Linearrichtung durch den rohrförmigen Robotikarm 21 hindurch bewegt wird, um über ein Getriebe (nicht gezeigt) das Werkzeug 23 am freien Ende des Robotikarms 21 unabhängig von dessen Bewegung in der ersten und zweiten Linearrichtung 27 und 28 zu bewegen. In der Detailansicht des rohrförmigen Robotikarms 21 sind sowohl die Kurvenrolle 47, die fest mit der Rohrhalterung 46 gekoppelt ist, und die Kurvenrolle 50, die relativ beweglich zum rohrförmigen Robotikarm 21 mit der sich durch das einteilige Rohr des Robotikarms 21 erstreckenden Abtriebsachse 41 verbunden ist, zu erkennen. Die Abtriebsachse 41 erstreckt sich durch das gesamte Rohr hindurch und ist vorne über eine Mechanik oder ein Getriebe mit dem Werkzeug 23 gekoppelt. Neben der Abtriebsachse 41 ist an dem Koppelungsende des Robotikarms 21, das dem Werkzeug 23 gegenüberliegt, ein Anschlussstutzen 52 für eine Medienleistung 55 zum Werkzeug 23 vorgesehen. Auf der Gegenseite der Kurvenrolle 47 weist die Rohrhalterung 46 zwei Führungen 53 auf, auf denen mit der Rohrhalterung 46 der Robotikarms 21 auf der Schiene 31 des Führungswagen 37 geführt wird.

Fig. 8a zeigt nochmal eine perspektivische Ansicht der Robotikeinheit 2 aus Fig. 7a in einer perspektivischen Rückansicht, wobei die gestellfesten Komponenten der Linearführungen 27 und 28 nicht gezeigt sind. Neben dem Servomotor 35 und dem über das Ritzel 44 angetriebene Zahnriemen 36 ist die Rückseite des auf den Schienen 31 kippsicher in der zweiten Linearrichtung geführten Führungswagen 37 als Teil der zweiten Linearführung 28 zu erkennen. Hier sind deutlich der Servomotor 38, der zugehörige Zahnriemen 40 und die damit verbundene Antriebsplatte 32 der ersten Linearführung 27 dargestellt. Vom Werkzeugantrieb 49 sind in gleicherweise der Servomotor 39, das Ritzel 44 und der Zahnriemen 42, sowie die vom Zahnriemen 42 bewegte Antriebsplatte 33 zu erkennen. Die Antriebsplatte 33 ist ebenso wie Antriebslatte 32 der ersten Linearführung 27 auf den Schienen 31 in der ersten Linearrichtung kippsicher geführt. Der auf dem Führungswagen 37 montierte rohrförmige Robotikarm 21 erstreckt sich durch eine Öffnung 54 in der vorderen Gehäuseabdeckung 26, die von außen her durch die Manschette 24 abgedeckt ist.

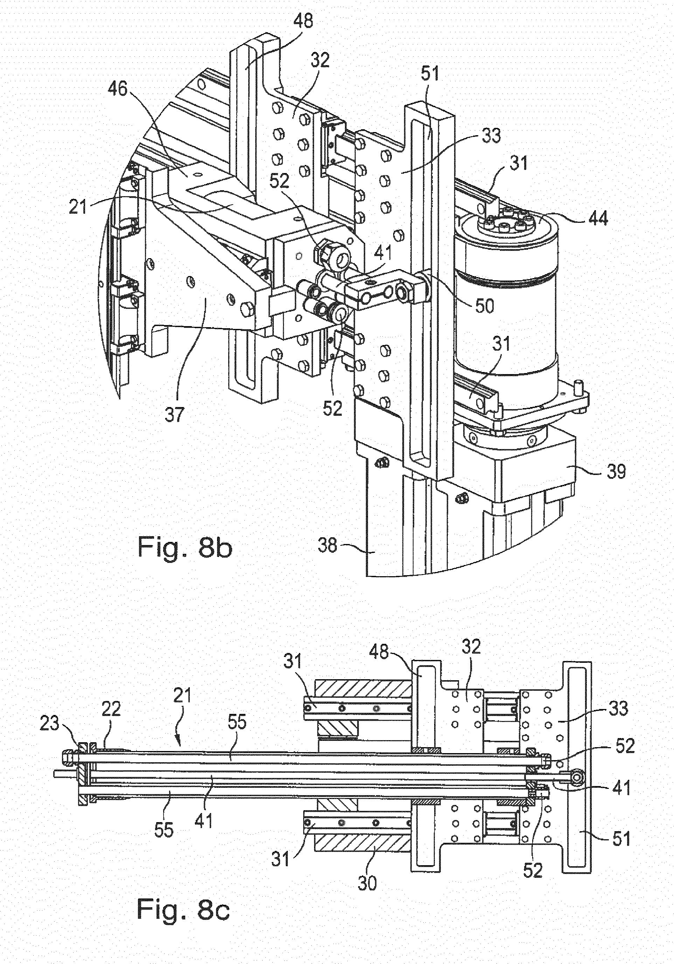

In der vergrößerten Darstellung des Koppelungsendes des rohrförmigen Robotikarms 21 in Fig. 8b ist die Aufnahme der Kurvenrolle 50 in der Nut 51 der Antriebsplatte 33 des Werkzeugantriebs 49 sehr gut zu erkennen. Bei einer Bewegung des Robotikarms 21 in der zweiten Linearrichtung, d.h. in Richtung der Nut 51 gleitet die Kurvenrolle 50 in der Nut 51 in der zweiten Linearrichtung ohne eine Bewegung relativ zum Robotikarm 21 zu vollziehen. In gleicher Weise läuft die Kurvenrolle 47 in der Nut 48 der Antriebsplatte 32 der ersten Linearführrun 27 unabhängig von der relativen Position der Kurvenrollen 47, 50 zueinander in den zugehörigen Nuten 48, 51 der Antriebsplatte 32 der ersten Linearführung 27 und der Antriebsplatte 33 des Werkzeugantriebs 49. Bei einer Bewegung der Antriebsplatten 32, 33 in der ersten Linearrichtung bewegt sich die Rohrhalterung 46 und der daran befestigte Robotikarm 12 auf der Schiene 33 des Führungswagen 37 in der ersten Linearrichtung. Bei einer relativen Bewegung der Antriebsplatte 32 der ersten Linearführung 27 und der Antriebsplatte 33 des Werkzeugantriebs 49 zueinander fährt die Abtriebsachse 41 in das mit der Rohrhalterung 46 verbundene Koppelungsende des Robotikarms 21 ein oder aus, um durch die relative Bewegung der Abtriebsachse 41 das Werkzeug 23 unabhängig zum einteiligen Robotikarm 21 zu bewegen.

Weiterhin sind oberhalb und unterhalb der Abtriebsachse 41 Anschlussstutzen 52 vorgesehen, die eine Zuführung von unterschiedlichen Medien zum Werkzeug 23 ermöglichen. Je nach Ausgestaltung des Werkzeug 23 können als Medien Druckluft, Vakuum, elektrische Energie, Steuersignale, oder Signale zur Werkzeugkodierung zugeführt werden. Der Anschluss geeigneter, flexibler Medienleitungen erfolgt über die dargestellten Anschlussstutzen 52. Die flexiblen Medienleitungen können vom Koppelungsende des Robotikarms 21 zwischen der ersten Linearführung 27 und der zweiten Linearführung 28 hindurch aus dem Gehäuse 20 der Robotikeinheit 2 herausgeführt werden.

In Fig. 8c ist nochmal ein Schnitt durch den Robotikarm 21 dargestellt, der neben der Durchführung der Abtriebsachse 41 durch das Innere des einteiligen rohrförmigen Robotikarms 21 auch zwei Medienleitungen 55 zeigt, die sich von den Anschlussstutzen 52 am Koppelungsende des Robotikarms 21 bis zum Werkzeug 21 erstrecken. Da die Medienleitungen 55 sich relativ zum Robotikarm 21 nicht bewegen, können für die Medienleitungen 55 starre Leitungen, beispielsweise aus Metall eingesetzt werden, wodurch neben der Produktionssicherheit auch die Arbeitssicherheit und Hygienebedingungen im Produktbereich 3 verbessert werden.

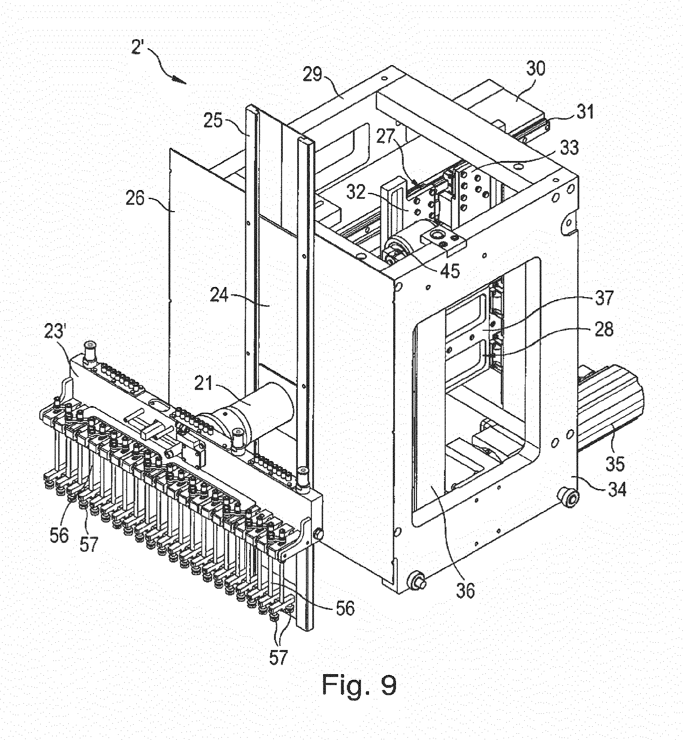

Die Fig. 9 zeigt eine perspektivische Darstellung der erfindungsgemäßen Robotikeinheit 2" aus der in Fig. 1 gezeigten balkonartigen Verpackungsmaschine 1. Dabei entspricht der Aufbau der Robotikeinheit 2" mit dem entlang zweier Linearrichtungen mittels zweier Linearführungen 27, 28 bewegbaren Robotikarm 21, dem Aufbau der in Fig. 2b gezeigten Robotikeinheit 2 und der anhand der Figuren 7a-7f und 8a-8c erläuterten Funktionsweise. Die Robotikeinheit 2" unterscheidet sich im Wesentlichen durch das Werkzeug 23', dass relativ bewegbar zum Robotikarm 21 an dem freien Ende des aus dem Gehäuse 20 auskragenden Robotikarms 21 angeordnet ist. Das Werkzeug 23' weist eine Vielzahl von einzelnen Greifern 56 auf, die über den Werkzeugantrieb 49 und ein Getriebe (nicht gezeigt) relativ zum Robotikarm 21 und relativ zueinander bewegbar sind. An den Greifern 56 sind am unteren Ende jeweils zwei Saugköpfe 57 angeordnet, die über die Medienleitung 55 im rohrförmigen Robotikarm 21 und entsprechende flexible mit den Anschlussstutzen 52 verbundene Versorgungsleitungen mit Vakuum versorgt werden, um die auf den Transportelementen 18 in der Übergabeeinheit 7 angeordneten Felder von Produkten 6 zu greifen. Die über das an den Saugköpfen 57 anliegende Vakuum im Übergabebereich 8 erfassten Produkte 6 werden durch eine Bewegung des Robotikarms 21 in der zweiten Linearrichtung angehoben und mittels eines Einfahrens des Robotikarms 21 in das Gehäuse 20 der Robotikeinheit 21" in Richtung des rückseitigen Umsetzbereichs 9 bewegt und dort übereinandergestapelt.

Durch die Überlagerung der entkoppelten linearen Bewegungen des Robotikarms 21 in der ersten Linearrichtung und der zweiten Linearrichtung wird eine Bewegung des Werkzeugs 23 in der gesamten von den zwei Linearrichtungen aufgespannten vertikalen Ebene ermöglicht, die ansonsten nur mit einer mehrarmigen Knickarmrobotik oder einer rahmengeführten Deltarobotik möglich ist. Im Gegensatz zu den herkömmlichen Robotiken, ermöglicht eine erfindungsgemäße Robotikeinheit 2 mit einem lineargeführten Robotikarm 21 eine voneinander entkoppelte Bewegung des Robotikarm 21 in der ersten auskragenden Linearrichtung und einer mindestens zweiten Linearrichtung quer zur ersten Linearrichtung. Im Gegensatz zu herkömmlichen Robotiken, bei denen Bewegungsachsen sich gegenseitig beeinflussen, ermöglicht die entkoppelte Bewegung des Robotikarms 21 über eine erste Linearführung 27 und eine zweite Linearführung 28 hohe Bewegungsgeschwindigkeiten des Werkzeugs 23, die eine schnelle Produktübergabe auch bei einem überbaufreien zugänglichen Produktbereich 3 ermöglichen. Darüber hinaus eignet sich ein derartiger Aufbau für eine Modulbauweise der unterschiedlichen Robotikeinheiten 2, 2', 2", 2'" einer erfindungsgemäßen balkonartigen Verpackungsmaschine 1, die jeweils einen gleichartigen Antrieb durch die Linearführungen 27, 28 aufweisen. Dadurch werden sowohl Reparaturkosten und Stillstandszeiten reduziert, als auch die Bereitstellung von mehrfach geeigneten Komponenten und ganzen Robotikeinheiten 2 zum schnellen Austausch erleichtert.

**Bezugszeichenliste**

| | |
|---|---|
| 1 Verpackungsmaschine | 31 Schiene |
| 2,2',2",2'" Robotikeinheit | 32 Antriebsplatte |
| 3 Produktbereich | 33 Antriebsplatte |
| 4 Maschinenaufbau | 34 Führungsplatte |
| 5 Zuführbereich | 35 Servomotor |
| 6 Produkte | 36 Zahnriemen |
| 7 Übergabeeinheit | 37 Führungswagen |
| 8 Übergabebereich | 38 Servomotor |
| | 39 Servomotor |
| 10 Fördereinheit | 40 Zahnriemen |
| 11 Faltschachtelzuschnitte | 41 Abtriebsachse |
| 12 Aufrichteinheit | 42 Zahnriemen |
| 13 Stempel | 43 Montageplatte |
| 14 Faltschachtel | 44 Ritzel |
| 15 Deckel | 45 Umlenkrolle |
| 16 Transporteinheit | 46 Rohrhalterung |
| 17 Abführbereich | 47 Kurvenrolle |
| 18 Transportelement | 48 Nut |
| 19 Seitenrahmen | 49 Werkzeugantrieb |
| 20 Gehäuse | 50 Kurvenrolle |
| 21 Robotikarm | 51 Nut |
| 22 freies Ende | 52 Anschlussstützen |
| 23 Werkzeug | 53 Führungen |
| 24 Manschette | 54 Öffnung |
| 25 Führung | 55 Medienleitungen |
| 26 Gehäuseabdeckung | 56 Greifer |
| 27 erste Linearführung | 57 Saugköpfe |
| 28 zweite Linearführung | |
| 29 Rahmenplatte | |
| 30 Führungsplatte | |

## Patentansprüche

1. Verpackungsmaschine (1) in Balkonbauweise mit einem Produktbereich (3) mit hohen Hygieneanforderungen zum Zuführen und Verpacken von Produkten (6) aus dem Pharmazie- und Lebensmittelbereich, einem an einer Rückseite des Produktbereichs (3) angeordneten Maschinenaufbau (4), der sich senkrecht zum Produktbereich (3) erstreckt, und mindestens einer Robotikeinheit (2) zum Positionieren und/oder Verpacken der Produkte (6) im Produktbereich (3), wobei die Robotikeinheit (2) an dem Maschinenaufbau (4) angeordnet ist oder einen Teil des Maschinenaufbaus (4) bildet, **dadurch gekennzeichnet, dass** die mindestens eine Robotikeinheit (2) ein Gehäuse (20), einen in mindestens zwei Linearrichtungen gegenüber dem Gehäuse (20) bewegbaren Robotikarm (21), mindestens zwei unabhängige Antriebe, die in dem Gehäuse (20) angeordnet und mit dem Robotikarm (21) verbunden sind, um den Robotikarm (21) entsprechend in den mindestens zwei Linearrichtungen zu bewegen, und ein an einem freien Ende des Robotikarms (21) angeordnetes Werkzeug (23) zum Positionieren und/oder Verpacken der Produkte (6) aufweist, wobei der Robotikarm (21) in der ersten Linearrichtung bewegbar ist, um die Auskragungslänge des Robotikarms (21) zu verändern, und in mindestens einer zweiten Linearrichtung quer zur ersten Linearrichtung bewegbar ist, und wobei die Robotikeinheit (2) eine Manschette (24) aufweist, die den Robotikarm (21) umgibt und das Gehäuse (20) der Robotikeinheit (2) unabhängig von der Bewegung des Robotikarms (21) in der ersten die Auskragungslänge verändernden Linearrichtung und der mindestens einen zweiten Linearrichtung gegenüber dem Produktbereich (3) abdichtet, um den Produktbereich (3) gegenüber einer Emission aus der Robotikeinheit (2) zu schützen und die hohen Hygieneanforderungen für den Produktbereich (3) zu erfüllen.

2. Verpackungsmaschine (1) in Balkonbauweise nach Anspruch 1,
**dadurch gekennzeichnet, dass** die mindestens eine Robotikeinheit (2) mindestens zweier Linearführungen (27, 28) aufweist, jede Linearführung (27, 28) ist mit einem der unabhängigen Antriebe gekoppelt, um den Robotikarm (21) in eine der mindestens zwei Linearrichtungen zu bewegen.

3. Verpackungsmaschine (1) in Balkonbauweise nach Anspruch 1 oder 2,
**dadurch gekennzeichnet, dass** der Robotikarm (21) bis zum freien Ende des Robotikarms (21) gelenkfrei ausgebildet ist.

4. Verpackungsmaschine (1) in Balkonbauweise nach einem der Ansprüche 1 bis 3,
**dadurch gekennzeichnet, dass** das am freien Ende des Robotikarms (21) angeordnete Werkzeug (23) ein relativ zum Robotikarm (21) bewegbares Werkzeug (23) ist.

5. Verpackungsmaschine (1) in Balkonbauweise nach Anspruch 4,
**dadurch gekennzeichnet, dass** der Robotikarm (21) rohrförmig ausgebildet ist und in dem rohrförmigen Robotikarm (21) eine entkoppelte Abtriebsachse (41) angeordnet ist, um das am freien Ende des Robotikarms (21) angeordnete Werkzeug (23) zum Positionieren und/oder Verpacken der Produkte (6) relativ zum Robotikarm (21) zu bewegen.

6. Verpackungsmaschine (1) in Balkonbauweise nach Anspruch 5,
**dadurch gekennzeichnet, dass** das am freien Ende des Robotikarms (21) angeordnete Werkzeug (23) ein Getriebe aufweist, um eine Bewegung der Abtriebsachse (41) in eine Bewegung des Werkzeugs (23) zum Positionieren und/oder Verpacken der Produkte (6) zu übersetzen.

7. Verpackungsmaschine (1) in Balkonbauweise nach Anspruch 6,
**dadurch gekennzeichnet, dass** das Getriebe die Bewegung der Abtriebsachse (41) in eine Bewegung des Werkzeugs (23) in einer dritten Richtung quer zur ersten und zweiten Linearrichtung übersetzt.

8. Verpackungsmaschine (1) in Balkonbauweise nach einem der Ansprüche 1 bis 7,
**dadurch gekennzeichnet, dass** der Robotikarm (21) rohrförmig ausgebildet ist und in dem rohrförmigen Robotikarm (21) eine Medienführung (55), insbesondere eine Fluidleitung, eine Energieleitung oder eine Signalleitung, vorgesehen ist, um das am freien Ende des Robotikarms (21) angeordnete Werkzeug (23) mit einem Medium zu versorgen.

9. Verpackungsmaschine (1) in Balkonbauweise nach einem der Ansprüche 1 bis 8,
**dadurch gekennzeichnet, dass** die Manschette (24) als unflexible ebene Manschette, die in einer geeigneten Aufnahme am Gehäuse geführt ist, oder als elastische Manschette ausgebildet ist, die am Rand der Manschette an dem Gehäuse (20) befestigt ist.

10. Verpackungsmaschine (1) in Balkonbauweise nach einem der Ansprüche 1 bis 9,
**dadurch gekennzeichnet, dass** die Robotikeinheit (2) einen ersten Elektromotor (38) für die Bewegung des Robotikarms (21) in der ersten Linearrichtung, einen zweiten Elektromotor (35) für die Bewegung des Robotikarms (21) in der mindestens einen zweiten Linearrichtung und einen dritten Elektromotor (39) für eine Bewegung des Werkzeugs (23) relativ zum Robotikarm (21) aufweist, wobei der erste, zweite und dritte Elektromotor (35, 38, 39) unabhängig voneinander ausgebildet und innerhalb des Gehäuses (20) der Robotikeinheit (2) angeordnet sind.

11. Verwendung einer Robotikeinheit (2) für eine Verpackungsmaschine, insbesondere für eine Verpackungsmaschine (1) in Balkonbauweise nach einem der Ansprüche 1 bis 10, die Robotikeinheit (21) umfasst einen rohrförmigen Robotikarm (21), ein an einem freien Ende des Robotikarms (21) angeordnetes und relativ zum Robotikarm (21) bewegbares Werkzeug (23), ein Gehäuse (20), und mindestens drei unabhängige Antriebe, die in dem Gehäuse angeordnet sind,
wobei der rohrförmige Robotikarm (21) entlang mindestens zweier Linearrichtungen gegenüber dem Gehäuse (20) bewegbar ist und eine entkoppelte Abtriebsachse (41) aufweist, die sich durch den rohrförmigen Robotikarm (21) erstreckt, und wobei der rohrförmige Robotikarm (21) von einem ersten Antrieb in einer ersten Linearrichtung bewegbar ist, um die Auskragungslänge des Robotikarms (21) zu verändern, und von einem zweiten Antrieb in mindestens einer zweiten Linearrichtung quer zur ersten Linearrichtung bewegbar ist,
und wobei die entkoppelte Abtriebsachse (41) von einem dritten Antrieb relativ zum rohrförmigen Robotikarm (21) bewegbar ist, um das Werkzeug (23) unabhängig gegenüber dem Robotikarm (21) zu bewegen.

12. Verwendung einer Robotikeinheit (2) nach Anspruch 11, wobei das am freien Ende des Robotikarms (21) angeordnete Werkzeug (23) ein Getriebe aufweist, um eine Bewegung der entkoppelten Abtriebsachse (41) in eine Bewegung des Werkzeugs (23) zu übersetzen.

13. Verwendung einer Robotikeinheit (2) nach Anspruch 11 oder 12, wobei in dem rohrförmigen Robotikarm (21) eine Medienführung (55), insbesondere eine Fluidleitung, eine Energieleitung oder eine Signalleitung, vorgesehen ist, um das am freien Ende des Robotikarms (21) angeordnete Werkzeug (23) mit einem Medium zu versorgen.

14. Verwendung einer Robotikeinheit (2) nach einem der Ansprüche 11 bis 13, wobei die Robotikeinheit (2) eine Manschette (24) aufweist, die den Robotikarm (21) umgibt und das Gehäuse (20) der Robotikeinheit (2) unabhängig von der Bewegung des Robotikarms (21) in der ersten und der mindestens einen zweiten Linearrichtung abdichtet, wobei die Manschette (24) bevorzugt als unflexible ebene Manschette, die in einer geeigneten Aufnahme am Gehäuse geführt ist, oder als elastische Manschette ausgebildet ist, die am Rand der Manschette an dem Gehäuse (20) befestigt ist.

15. Verwendung einer Robotikeinheit (2) nach einem der Ansprüche 11 bis 14, wobei die Robotikeinheit (2) einen ersten Elektromotor (38) für die Bewegung des Robotikarms (21) in der ersten Linearrichtung, einen zweiten Elektromotor (35) für die Bewegung des Robotikarms (21) in der mindestens einen zweiten Linearrichtung und einen dritten Elektromotor (39) für die Bewegung des Werkzeugs (23) aufweist, wobei der erste, zweite und dritte Elektromotor (35, 38, 39) getrennt voneinander ausgebildet und innerhalb des Gehäuses (20) der Robotikeinheit (2) angeordnet sind.

## Claims

1. A balcony-type packaging machine (1) comprising a product area (3) with strict hygienic specifications for feeding and packaging products (6) from the pharmaceutical and food sector, a machine structure (4) arranged at a rear side of the product area (3) and extending perpendicularly to the product area (3), and at least one robotic unit (2) for positioning and/or packaging the products (6) in the product area (3), said robotic unit (2) being arranged on said machine structure (4) or forming part of said machine structure (4), **characterized in that** said at least one robotic unit (2) comprises a housing (20), a robotic arm (21) movable in at least two linear directions with respect to said housing (20), at least two independent drives arranged in said housing (20) and connected to said robotic arm (21) for respectively moving said robotic arm (21) in said at least two linear directions and has a tool (23) for positioning and/or packaging the products (6) arranged at a free end of the robotic arm (21), wherein the robotic arm (21) is movable in the first linear direction to vary the protruding length of the robotic arm (21) and is movable in at least one second linear direction transverse to the first linear direction, and wherein the robotic unit (2) has a sleeve (24) surrounding the robotic arm (21) and sealing the housing (20) of the robotic unit (2) against the product area (3) irrespective of the movement of the robotic arm (21) in the first linear direction for varying the protruding length and the at least one second linear direction, in order to protect the product area (3) against emission from the robotic unit (2) and to meet the high hygienic specifications for the product area (3).

2. The balcony-type packaging machine (1) according to claim 1,
**characterized in that** said at least one robotic unit (2) comprises at least two linear guides (27, 28), each linear guide (27, 28) being coupled to one of said independent drives to move said robotic arm (21) in one of said at least two linear directions.

3. The balcony-type packaging machine (1) according to claim 1 or 2,
**characterized in that** the robotic arm (21) is designed without joints up to the free end of the robotic arm (21).

4. The balcony-type packaging machine (1) according to any one of claims 1 to 3,
**characterized in that** the tool (23) arranged at the free end of the robotic arm (21) is a tool (23) movable relative to the robotic arm (21).

5. The balcony-type packaging machine (1) according to claim 4,
**characterized in that** the robotic arm (21) is tube-shaped and a separate output shaft (41) is arranged in the tube-shaped robotic arm (21) to move the tool (23) for positioning and/or packaging the products (6) arranged at the free end of the robotic arm (21) relative to the robotic arm (21).

6. The balcony-type packaging machine (1) according to claim 5,
**characterized in that** the tool (23) arranged at the free end of the robotic arm (21) comprises a transmission for converting a movement of the output shaft (41) into a movement of the tool (23) for positioning and/or packaging the products (6).

7. The balcony-type packaging machine (1) according to claim 6,
**characterized in that** the transmission converts the movement of the output shaft (41) into a movement of the tool (23) in a third direction transverse to the first and second linear directions.

8. The balcony-type packaging machine (1) according to any one of claims 1 to 7,
**characterized in that** the robotic arm (21) is tube-shaped and a media duct (55), in particular a fluid line, a power line or a signal line, is provided in the tube-shaped robotic arm (21) in order to supply the tool (23) arranged at the free end of the robotic arm (21) with a medium.

9. The balcony-type packaging machine (1) according to one of claims 1 to 8,
**characterized in that** the sleeve (24) is designed as an inflexible flat sleeve which is guided in a suitable receptacle along the housing, or as an elastic sleeve which is fastened to the housing (20) at the periphery of the sleeve.

10. The balcony-type packaging machine (1) according to any one of claims 1 to 9,
**characterized in that** the robotic unit (2) comprises a first electric motor (38) for moving the robotic arm (21) in the first linear direction, a second electric motor (35) for moving the robotic arm (21) in the at least one second linear direction and a third electric motor (39) for moving the tool (23) relative to the robotic arm (21), wherein the first, second and third electric motors (35, 38, 39) are formed independently of each other and are arranged within the housing (20) of the robotic unit (2).

11. Use of a robotic unit (2) for a packaging machine, in particular for a balcony-type packaging machine (1) according to one of claims 1 to 10, the robotic unit (21) comprising a tube-shaped robotic arm (21), a tool (23) arranged at a free end of the robotic arm (21) and movable relative to the robotic arm (21), a housing (20), and at least three independent drives disposed in the housing,
the tube-shaped robotic arm (21) being movable along at least two linear directions relative to the housing (20) and having a separate output shaft (41) extending through the tube-shaped robotic arm (21), and wherein the tube-shaped robotic arm (21) is movable by a first drive in a first linear direction to vary the protruding length of the robotic arm (21) and movable by a second drive in at least a second linear direction transverse to the first linear direction,
and wherein the separate output shaft (41) is movable by a third drive relative to the tube-shaped robotic arm (21) to move the tool (23) independently relative to the robotic arm (21).

12. Use of a robotic unit (2) according to claim 11, wherein the tool (23) arranged at the free end of the robotic arm (21) comprises a transmission for converting a movement of the separate output shaft (41) into a movement of the tool (23).

13. Use of a robotic unit (2) according to claim 11 or 12, wherein a media duct (55), in particular a fluid line, a power line or a signal line, is provided in the tube-shaped robotic arm (21) in order to supply the tool (23) arranged at the free end of the robotic arm (21) with a medium.

14. Use of a robotic unit (2) according to any one of claims 11 to 13, wherein the robotic unit (2) has a sleeve (24) surrounding the robotic arm (21) and sealing the housing (20) of the robotic unit (2) irrespective of the movement of the robotic arm (21) in the first linear direction and the at least one second linear direction, wherein the sleeve (24) is preferably designed as an inflexible flat sleeve which is guided in a suitable receptacle along the housing, or as an elastic sleeve which is fastened to the housing (20) at the periphery of the sleeve.

15. Use of a robotic unit (2) according to any one of claims 11 to 14, wherein the robotic unit (2) comprises a first electric motor (38) for moving the robotic arm (21) in the first linear direction, a second electric motor (35) for moving the robotic arm (21) in the at least one second linear direction, and a third electric motor (39) for moving the tool (23), wherein the first, second and third electric motors (35, 38, 39) are formed separately of each other and are arranged within the housing (20) of the robotic unit (2).

## Revendications

1. Machine d'emballage (1) de type balcon avec une zone de produits (3) avec des exigences d'hygiène élevées pour alimenter et emballer des produits (6) du secteur pharmaceutique et alimentaire, une structure de machine (4) agencée au niveau d'un côté arrière de la zone de produits (3), qui s'étend perpendiculairement à la zone de produits (3), et au moins une unité robotique (2) pour positionner et/ou emballer les produits (6) dans la zone de produits (3), dans laquelle l'unité robotique (2) est agencée sur la structure de machine (4) ou forme une partie de la structure de machine (4), **caractérisée en ce que** la au moins une unité robotique (2) présente un boîtier (20), un bras robotique (21) qui peut être déplacé dans au moins deux directions linéaires par rapport au boîtier (20), au moins deux entraînements indépendants qui sont agencés dans le boîtier (20) et sont connectés au bras robotique (21) pour déplacer le bras robotique (21) de manière correspondante dans les au moins deux directions linéaires, et un outil (23) agencé au niveau d'une extrémité libre du bras robotique (21) pour positionner et/ou emballer les produits (6), dans laquelle le bras robotique (21) est mobile dans la première direction linéaire afin de changer la longueur de porte-à-faux du bras robotique (21), et est mobile dans au moins une deuxième direction linéaire transversalement à la première direction linéaire, et dans laquelle l'unité robotique (2) présente un manchon (24) qui entoure le bras robotique (21), et le boîtier (20) scelle l'unité robotique (2) indépendamment du mouvement du bras robotique (21) dans la première direction linéaire qui change la longueur de porte-à-faux et la au moins une deuxième direction linéaire par rapport à la zone de produits (3), pour protéger la zone de produits (3) à l'encontre d'une émission de l'unité robotique (2) et pour satisfaire les exigences d'hygiène élevées pour la zone de produit (3).

2. Machine d'emballage (1) de type balcon selon la revendication 1,
**caractérisée en ce que** la au moins une unité robotique (2) présente au moins deux guides linéaires (27, 28), chaque guide linéaire (27, 28) est couplé à l'un des entraînements indépendants, afin de déplacer le bras robotique (21) dans l'une des au moins deux directions linéaires.

3. Machine d'emballage (1) de type balcon selon la revendication 1 ou 2,
**caractérisée en ce que** le bras robotique (21) est conçu sans articulation jusqu'à l'extrémité libre du bras robotique (21).

4. Machine d'emballage (1) de type balcon selon l'une des revendications 1 à 3,
**caractérisée en ce que** l'outil (23) agencé au niveau de l'extrémité libre du bras robotique (21) est un outil (23) mobile par rapport au bras robotique (21).

5. Machine d'emballage (1) de type balcon selon la revendication 4,
**caractérisée en ce que** le bras robotique (21) est réalisé de forme tubulaire et un arbre de sortie découplé (41) est agencé dans le bras robotique de forme tubulaire (21) pour déplacer l'outil (23) agencé au niveau de l'extrémité libre du bras robotique (21) afin de positionner et/ou emballer des produits (6) par rapport au bras robotique (21).

6. Machine d'emballage (1) de type balcon selon la revendication 5,
**caractérisée en ce que** l'outil (23) agencé au niveau de l'extrémité libre du bras robotique (21) présente un engrenage pour traduire un mouvement de l'arbre de sortie (41) en un mouvement de l'outil (23) pour positionner et/ou emballer des produits (6).

7. Machine d'emballage (1) de type balcon selon la revendication 6,
**caractérisée en ce que** l'engrenage traduit le mouvement de l'arbre de sortie (41) en un mouvement de l'outil (23) dans une troisième direction transversale à la première et à la deuxième direction linéaire.

8. Machine d'emballage (1) de type balcon selon l'une des revendications 1 à 7,
**caractérisée en ce que** le bras robotique (21) est réalisé de forme tubulaire, , un guide de milieu (55), en particulier une ligne de fluide, une ligne électrique ou une ligne de signal, est prévu dans le bras robotique de forme tubulaire (21) pour permettre à l'outil (23) agencé au niveau de l'extrémité libre du bras robotique (21) de fournir un milieu.

9. Machine d'emballage (1) de type balcon selon l'une des revendications 1 à 8,
**caractérisée en ce que** le manchon (24) est conçu sous la forme d'un manchon plat rigide qui est guidé dans un logement approprié sur le boîtier, ou sous la forme d'un manchon élastique qui est fixé au bord du manchon sur le boîtier (20).

10. Machine d'emballage (1) de type balcon selon l'une des revendications 1 à 9,
**caractérisée en ce que** l'unité robotique (2) présente un premier moteur électrique (38) pour déplacer le bras robotique (21) dans la première direction linéaire, un deuxième moteur électrique (35) pour déplacer le bras robotique (21) dans la au moins une deuxième direction linéaire et un troisième moteur électrique (39) pour déplacer l'outil (23) par rapport au bras robotique (21), les premier, deuxième et troisième moteurs électriques (35, 38, 39) sont réalisés indépendamment les uns des autres et agencés à l'intérieur du boîtier (20) de l'unité robotique (2).

11. Utilisation d'une unité robotique (2) pour une machine d'emballage, en particulier pour une machine d'emballage (1) de type balcon selon l'une des revendications 1 à 10, l'unité robotique (21) présente un bras robotique tubulaire (21), un outil (23) mobile par rapport au bras robotique (21) et agencé au niveau d'une extrémité libre du bras robotique (21), un boîtier (20), et au moins trois entraînements indépendants qui sont agencés dans le boîtier,
dans laquelle le bras robotique de forme tubulaire (21) est mobile le long d'au moins deux directions linéaires par rapport au boîtier (20) et présente un arbre de sortie découplé (41) qui s'étend à travers le bras robotique de forme tubulaire (21), et dans laquelle le bras robotique tubulaire (21) est mobile depuis un premier entraînement dans une première direction linéaire afin de changer la longueur de porte-à-faux du bras robotique (21), et est mobile depuis un deuxième entraînement dans au moins une deuxième direction linéaire transversale à la première direction linéaire,
et dans laquelle l'arbre de sortie découplé (41) est mobile depuis un troisième entraînement par rapport au bras robotique tubulaire (21) afin de déplacer l'outil (23) indépendamment par rapport au bras robotique (21).

12. Utilisation d'une unité robotique (2) selon la revendication 11, dans laquelle l'outil (23) agencé au niveau de l'extrémité libre du bras robotique (21) présente un engrenage pour traduire un mouvement de l'arbre de sortie découplé (41) en un mouvement de l'outil (23).

13. Utilisation d'une unité robotique (2) selon la des revendication 11 ou 12, dans laquelle un guide de milieu (55), en particulier une ligne de fluide, une ligne électrique ou une ligne de signal, est prévu dans le bras robotique tubulaire (21) pour fournir un milieu à l'outil (23) agencé au niveau de l'extrémité libre du bras robotique (21).

14. Utilisation d'une unité robotique (2) selon l'une des revendications 11 à 13, dans laquelle l'unité robotique (2) présente un manchon (24) qui entoure le bras robotique (21) et le boîtier (20) scelle l'unité robotique (2) indépendamment du mouvement du bras robotique (21) dans la première et la au moins une deuxième direction linéaire, dans laquelle le manchon (24) est de préférence conçu sous la forme d'un manchon plat rigide qui est guidé dans un logement approprié sur le boîtier, ou sous la forme d'un manchon élastique qui est fixé au bord du manchon sur le boîtier (20).

15. Utilisation d'une unité robotique (2) selon l'une des revendications 11 à 14, dans laquelle l'unité robotique (2) présente un premier moteur électrique (38) pour déplacer le bras robotique (21) dans la première direction linéaire, et un deuxième moteur électrique (35) pour déplacer le bras robotique (21) dans la au moins une deuxième direction linéaire et un troisième moteur électrique (39) pour déplacer l'outil (23), dans laquelle les premier, deuxième et troisième moteurs électriques (35, 38, 39) sont formés séparés les uns des autres et sont agencés à l'intérieur du boîtier (20) de l'unité robotique (2).
